(19) Europäisches Patentamt
European Patent Office
Office européen des brevets

(11) **EP 1 703 436 A2**

(12) **EUROPEAN PATENT APPLICATION**

(43) Date of publication:
**20.09.2006 Bulletin 2006/38**

(51) Int Cl.:
***G06K 9/00*** *(2006.01)*

(21) Application number: **06110983.1**

(22) Date of filing: **10.03.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** | (72) Inventor: **ISHII, Hirotaka,** **OMRON Corp.,** **801,Minamifudodo-cho** **Kyoto-shi,** **Kyoto 600-8530 (JP)** |
| (30) Priority: **15.03.2005 JP 2005073753** | (74) Representative: **Weihs, Bruno Konrad et al** **Osha Liang** **121, Avenue des Champs Elysées** **75008 Paris (FR)** |
| (71) Applicant: **OMRON CORPORATION** **Kyoto-shi, Kyoto 600-8530 (JP)** | |

(54) **Image processing system, image processing apparatus and method, recording medium, and program**

(57)    An object of the present invention is to ensure that facial images can be recognized easily and accurately. A image pickup apparatus photographs the face of a user and outputs pixel values substantially proportionate to the logarithm of the amount of incident light. A difference image calculating unit calculates a difference image from the difference in pixel values between a first image in which the face of the user is photographed by the image pickup apparatus while a lighting apparatus does not illuminate the face of the user with light, and a second image in which the face of the user is photographed by the image pickup apparatus while the lighting apparatus does illuminate the face of the user with light. A facial area extracting unit extracts the areas of the face of the user in the difference image, and determines which way the user is facing, and a facial organ extracting unit extracts the organs of the face of the user. The present invention can be applied, for example, to an image processing apparatus that processes facial images.

## FIG.1

**Description**

BACKGROUND OF THE INVENTION

1. Field of the Invention

The present invention relates to an image processing system, an image processing apparatus and method, a recording medium, and a program, and particularly relates to an image processing system, an image processing apparatus and method, a recording medium, and a program by which the process of recognizing facial images can be easily and accurately performed.

2. Description of the Related Art

In conventional practice, facial image recognizing apparatuses have been used that recognize areas of the user's face and areas of the eyes and mouth and other such organs included in images taken with an imaging device, and that output the positions of these recognized areas and extract images of the recognized areas (for example, see Japanese Patent Application Itaid-Open No. H05-91406).
However, in conventional facial image recognizing apparatuses, the user's face and organs of the face sometimes cannot be accurately recognized due to the effects of objects other than the face included in the photographed image, and due to differences in lighting conditions for the photographed subjects. For example, sometimes the face and organs of the face cannot be accurately recognized if different settings are not used for images of generally bright subjects photographed in a bright outdoor setting and images of a generally dark subjects photographed in a dark indoor setting.

SUMMARY OF THE INVENTION

The present invention was designed in view of these circumstances, and an object thereof is to ensure that facial images can be easily and accurately recognized.
The image processing system of the present invention includes image pickup means for photographing a subject and outputting pixel values substantially proportionate to the logarithm of the amount of incident light; lighting means for radiating light to the face to be recognized; capturing means for capturing a first image in which the face is photographed by the image pickup means while the lighting means does not irradiate the face with light, and a second image in which the face is photographed by the image pickup means while the lighting means irradiates the face with light; difference image calculation means for calculating a difference image composed of the difference in pixel values between the first image and the second image; pixel value processing means for performing a specific process using the pixel values of the pixels of the difference image calculated by the difference image calculating means; threshold setting means for setting a threshold for the processing results of the pixel value processing means; and extraction means for extracting the areas of the face in the difference image on the basis of the threshold set by the threshold setting means.
In the image processing system of the present invention, when a subject is photographed by the image pickup means, pixel values substantially proportionate to the logarithm of the amount of incident light are outputted, and a first image is a captured image in which the face is photographed by the image pickup means while the lighting means does not irradiate the face with light, and a second image is also captured in which the face is photographed by the image pickup means while the lighting means irradiates the face with light. A difference image composed of the difference in pixel values between the first and second images is then calculated, and a specific process is performed using the pixel values of the pixels of the calculated difference image. A threshold is also set for the results of this specific process, and the areas of the face in the difference image are extracted based on this set threshold.
Therefore, the areas of the face to be recognized can be accurately extracted from difference pictures. Facial images can thereby be easily and accurately recognized.
The image pickup means is configured from an image pickup apparatus that can photograph subjects at a dynamic range wider than the human eye using an HDRC (high dynamic range CMOS (complementary metal oxide semiconductor)) or another such logarithm conversion type image pickup element, for example.
The capturing means, the difference image calculating means, the image value processing means, the threshold setting means, and the extraction means are configured from a CPU (central processing unit), a DSP (digital signal processor), or another such arithmetic device, for example.
The lighting means can be made to irradiate the face with light from an oblique upward or an oblique downward angle. The areas and organs (skin, eyes, nose, mouth, etc.) of the face can thereby be accentuated.
The image pickup means can be made to have a logarithm conversion type image pickup element that uses the sub-threshold characteristics of a semiconductor and outputs a pixel value substantially proportionate to the logarithm of the amount of incident light.

The image processing apparatus of the present invention includes capturing means for capturing a first image in which the face to be recognized is photographed by image pickup means while the lighting means does not irradiate the face with light, and a second image in which the face to be recognized is photographed by the image pickup means while the lighting means irradiates the face with light; difference image calculation means for calculating a difference image composed of the difference in pixel values between the first image and the second image; pixel value processing means for performing a specific process using the pixel values of the pixels of the difference image calculated by the difference image calculating means; threshold setting means for setting a threshold for the processing results of the pixel value processing means; and extraction means for extracting the areas of the face in the difference image on the basis of the threshold set by the threshold setting means.

In the image processing apparatus of the present invention, a first image is captured, in which the face to be recognized is photographed by image pickup means while the lighting means does not irradiate the face with light, and a second image is also captured, in which the face to be recognized is photographed by the image pickup means while the lighting means irradiates the face with light. A difference image composed of the difference in pixel values between the first and second images is then calculated, and a specific process is performed using the pixel values of the pixels of the calculated difference image. A threshold is also set for the results of this specific process, and the areas of the face in the difference image are extracted based on this set threshold.

Therefore, the areas of the face can be accurately extracted from the difference image. Facial images can thereby be recognized easily and accurately.

The capturing means, the difference image calculating means, the image value processing means, the threshold setting means, and the extraction means are configured from a CPU (central processing unit), a DSP (digital signal processor), or another such arithmetic device, for example.

The pixel value processing means can be made to calculate the pixel added values by adding the pixel values calculated by the difference image calculating means for each row in the horizontal or vertical direction of the difference image, and the threshold setting means can be made to set a threshold for the pixel added values calculated by the pixel value processing means for each row in the horizontal or vertical direction of the difference image.

The areas of the face and other areas can thereby be easily distinguished in the difference image.

The threshold setting means can be made to set the average of the pixel values of the difference image for each row in the horizontal or vertical direction as the threshold. A threshold for distinguishing the areas of the face and other areas can thereby be easily set in the difference image.

The pixel value processing means can be made to create a histogram of the pixel values of the difference image by totaling the pixel number for each of the pixels having the same pixel value in the difference image calculated by the difference image calculating means, and the threshold setting means can be made to set a threshold for the histogram of the pixel values of the difference image.

The areas of the face and other areas can thereby be easily distinguished in the difference image.

Filter means for filtering the difference image calculated by the difference image calculating means can be further included.

The filter means can be configured from a CPU (central processing unit), a DSP (digital signal processor), or another such arithmetic device, for example, and the filtering can be a mosaic process, a smoothing process, a compression process of reducing the number of pixels in the image, or a low-pass filter process. Singular points having singular pixel values in relation to their surrounding pixels can thereby be eliminated from the difference image.

The first and second images can be photographed by the image pickup means having a logarithm conversion type image pickup element that uses the sub-threshold characteristics of a semiconductor and outputs a pixel value substantially proportionate to the logarithm of the amount of incident light.

The image processing method, program, and recording medium for storing this program of the present invention include the steps of capturing a first image in which the face to be recognized is photographed by image pickup means while the lighting means does not irradiate the face with light, and a second image in which the face to be recognized is photographed by the image pickup means while the lighting means irradiates the face with light; calculating a difference image composed of the difference in pixel values between the first image and the second image; performing a specific process for pixel values using the pixel values of the pixels of the difference image calculated by the step of calculating a difference image; setting a threshold for processing results by the step of performing a specific process for pixel values; and extracting the areas of the face in the difference image on the basis of the threshold set by the step of setting a threshold.

In the image processing method, program, and recording medium for storing this program of the present invention, a first image is captured, in which the face to be recognized is photographed by image pickup means while the lighting means does not irradiate the face with light, and a second image is also captured, in which the face to be recognized is photographed by the image pickup means while the lighting means irradiates the face with light. A difference image composed of the difference in pixel values between the first and second images is then calculated, and a specific process is performed using the pixel values of the pixels of the calculated difference image. A threshold is also set for the results of this specific process, and the areas of the face in the difference image are extracted based on this set threshold.

Therefore, the areas of the face can be accurately extracted from the difference image. Facial images can thereby be recognized easily and accurately.

According to the present invention, facial images can be recognized easily and accurately.

BRIEF DESCRIPTION OF THE DRAWINGS

FIG. 1 is a block diagram showing a structural example of an embodiment of an image processing system to which the present invention has been applied.

FIG. 2 is a diagram describing a summary of the process performed by the image processing apparatus 15;

FIG. 3 is a diagram describing a summary of the process performed by the image processing apparatus 15;

FIG. 4 is a block diagram showing a detailed structural example of the image pickup apparatus 12 in FIG. 1;

FIG. 5 is a diagram describing the sensitivity characteristics of a logarithm conversion type image pickup element;

FIG. 6 is a block diagram showing a detailed structural example of the difference image calculating unit 21 in FIG. 1;

FIG. 7 is a block diagram showing a detailed structural example of the facial area extracting unit 22 in FIG. 1;

FIG. 8 is a block diagram showing a detailed structural example of the face orientation determining unit 23 in FIG. 1;

FIG. 9 is a block diagram showing a detailed structural example of the facial organ extracting unit 24 in FIG. 1;

FIG. 10 is a diagram describing the direction from which the user 11 is illuminated with light;

FIG. 11 is a diagram describing the process of the difference image calculating unit 21;

FIG. 12 is a diagram describing the process of the facial area extracting unit 22;

FIG. 13 is a diagram describing the process of the face orientation determining unit 23;

FIG. 14 is a diagram describing the process of the image separating unit 103 of the facial organ extracting unit 24;

FIG. 15 is a diagram describing the process of the image separating unit 103 of the facial organ extracting unit 24;

FIG. 16 is a diagram describing the process of the pixel value adding unit 111, the pixel value adding unit 121, and the pixel value adding unit 131;

FIG. 17 is a diagram describing the process of the eye image processing unit 104;

FIG. 18 is a diagram describing the process of the nose image processing unit 105;

FIG. 19 is a diagram describing the process of the mouth image processing unit 106

FIG. 20 is a flowchart describing the process of the image processing apparatus 15;

FIG. 21 is a flowchart describing the process of the image processing apparatus 15;

FIG. 22 is a block diagram showing another embodiment of the facial area extracting unit 22 in FIG. 1;

FIG. 23 is a diagram describing the process performed by the facial area extracting unit 22 in FIG. 22;

FIG. 24 is a diagram describing the process performed by the facial area extracting unit 22 in FIG. 22;

FIG. 25 is a diagram describing the direction from which light illuminates the user 11; and

FIG. 26 is a block diagram showing a structural example of one embodiment of a computer in which the present invention is applied.

DESCRIPTION OF THE PREFERRED EMBODIMENTS

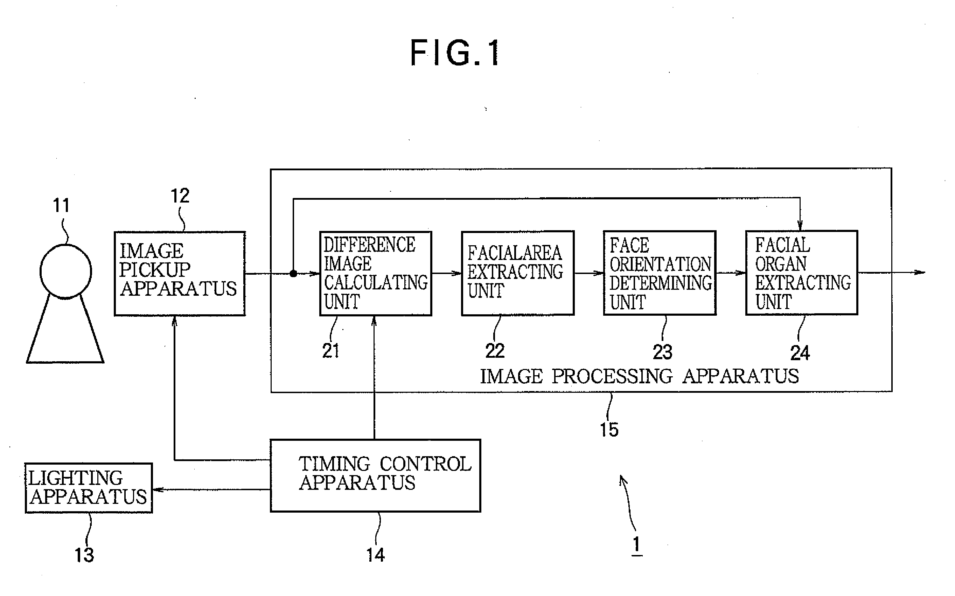

FIG. 1 shows a structural example of an embodiment of an image processing system to which the present invention is applied.

The image processing system 1 in FIG. 1 is configured from a image pickup apparatus 12 for photographing a user 11 as a subject, a lighting apparatus 13 for irradiating the user 11 with light, a timing control apparatus 14 for instructing (controlling) the timing of the photography or lighting of the image pickup apparatus 12 or lighting apparatus 13, and an image processing apparatus 15 for processing the images photographed by the image pickup apparatus 12.

The image pickup apparatus 12 photographs the user 11 as a subject and supplies the resulting image (image signal) to the image processing apparatus 15 according to a timing control signal supplied from the timing control apparatus 14. The image pickup apparatus 12 has an image pickup element that outputs pixel values proportionate to the logarithm of the amount of incident light, as will be described later. Also, the pixel values of all the pixels (photograph pixels) are read with the same timing in the image pickup apparatus 12.

The lighting apparatus 13 irradiates the user 11 with light according to a timing control signal supplied from the timing control apparatus 14.

The timing control apparatus 14 supplies a timing control signal as a photography cycle to the image pickup apparatus 12. For example, the timing control apparatus 14 supplies a timing control signal at a cycle (frame cycle) for photographing 30 images per second to the image pickup apparatus 12. A cycle of photographing 60 images per second or another cycle may also be used. The photographed images may be either progressive (non-interlace) images or interlace images.

The timing control apparatus 14 also supplies timing control signals for instructing (controlling) the timing of light irradiation to the lighting apparatus 13 so that images of the user 11 not irradiated by the lighting apparatus 13 and images of the user 11 irradiated by the lighting apparatus are alternately photographed by the image pickup apparatus 12. For example, when the timing control apparatus 14 supplies timing control signals to the image pickup apparatus 12 in frame cycles, it supplies timing control signals to the lighting apparatus 13 so that the user 11 is not irradiated by the lighting apparatus 13 at odd-number frames, and the user 11 is irradiated at even-number frames in the images photographed by the image pickup apparatus 12.

Furthermore, the timing control apparatus 14 supplies to the image processing apparatus 15 a determination signal for determining whether the images supplied from the image pickup apparatus 12 to the image processing apparatus 15 (hereinafter referred to as photographed images) are images (hereinafter referred to as standard images) photographed while the user 11 is not irradiated with light by the lighting apparatus 13, or images (hereinafter referred to as lighted images) photographed while the user 11 is irradiated with light by the lighting apparatus 13.

The image processing apparatus 15 is configured from a difference image calculating unit 21, a facial area extracting unit 22, a face orientation determining unit 23, and a facial organ extracting unit 24.

The image processing apparatus 15 selects images suitable for the face recognition process (face confirmation) from the photographed images supplied from the image pickup apparatus 12, and outputs the photographed images to subsequent apparatuses (not shown) along with information specifying areas of the face or organs of the face included in the selected photographed images. The term "organs of the face" herein refers to the eyes, nose, and mouth.

The photographed images (the corresponding image signals) from the image pickup apparatus 12 are supplied to the difference image calculating unit 21 and the facial organ extracting unit 24. The determination signals described above are also supplied to the difference image calculating unit 21 from the timing control apparatus 14.

The difference image calculating unit 21 determines whether the photographed images supplied from the image pickup apparatus 12 are standard images or lighted images, creates difference images using the standard images and the lighted images (which are supplied from the image pickup apparatus 12 as the subsequent frames), and supplies the difference images to the facial area extracting unit 22, according to the determination signals. The difference images are images in which the pixel vales of the pixels constituting the images equal the difference in pixel values of the corresponding pixels between the standard images and the lighted images.

The facial area extracting unit 22 extracts areas of the face of the user 11 from the difference images supplied from the difference image calculating unit 21, and supplies facial area information specifying the extracted areas together with the difference images to the face orientation determining unit 23.

The face orientation determining unit 23 determines the orientation of the face of the user 11 in the photographed images from the images of the areas of the face (hereinafter appropriately referred to as facial images) in the difference images specified by the facial area information from the facial area extracting unit 22. There are three types of determination results from the face orientation determining unit 23: front facing, right facing, and left facing. When the recognition process is performed using images in which the user is not facing forward, recognition is less precise in cases in which facial organ areas are extracted (specified) by the subsequent facial organ extracting unit 24 and in cases in which face recognition is performed by the apparatuses prior to the output of processing results by the image processing apparatus 15. Therefore, the face orientation determining unit 23 determines whether the difference images (photographed images) are images which are suitable for recognition and in which the user is facing forward. The face orientation determining unit 23 supplies the determination results indicating the direction in which the user 11 is facing to the facial organ extracting unit 24, together with the differences images and the facial area information supplied from the facial area extracting unit 22.

The facial organ extracting unit 24 extracts (specifies) areas of the facial organs (eyes, nose, and mouth) of the user 11 on the basis of the facial images from the face orientation determining unit 23 when the determination results (of facial orientation) supplied from the face orientation determining unit 23 are forward facing. The facial organ extracting unit 24 then outputs eye area information, nose area information, and mouth area information obtained as a result of extracting the facial organ areas to the subsequent apparatuses, together with the facial area information described above. The facial organ extracting unit 24 also outputs the photographed images supplied from the image pickup apparatus 12 to the subsequent apparatuses.

In the image processing system 1 configured as described above, the difference image calculating unit 21 of the image processing apparatus 15 captures standard images in which the image pickup apparatus 12 has photographed the face of the user 11 while the lighting apparatus 13 did not irradiate the user 11, and lighted images in which the image pickup apparatus 12 has photographed the face of the user 11 while the lighting apparatus 13 irradiated the face of the user 11.

The difference image calculating unit 21 calculates difference images from the standard images and the lighted images. The facial area extracting unit 22 extracts areas of the face of the user 11 from the difference images and supplies facial area information specifying the extracted areas to the face orientation determining unit 23. The facial organ extracting unit 24 extracts the areas of the eyes, nose, and mouth of the face from the facial images in which the face orientation determining unit 23 has determined that the face of the user 11 is facing forward, and obtains eye area information, nose area information, and mouth area information specifying these extracted areas. The facial organ extracting unit 24 outputs the obtained eye area information, nose area information, and mouth area information, as well as the facial area information obtained by the facial area extracting unit 22, and the photographed images supplied from the image pickup apparatus 12.

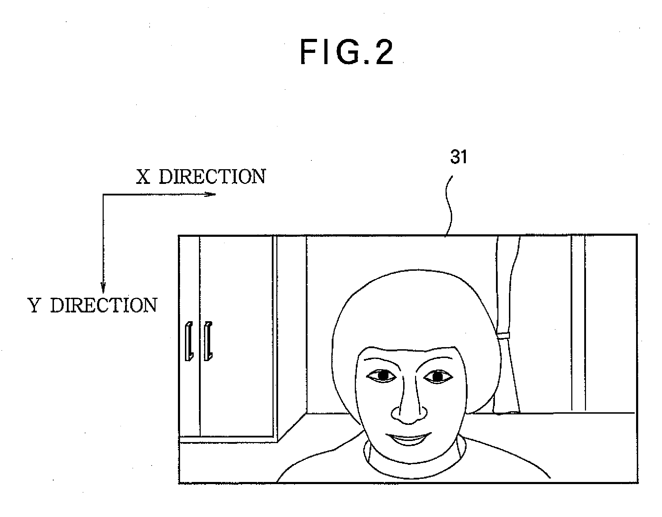

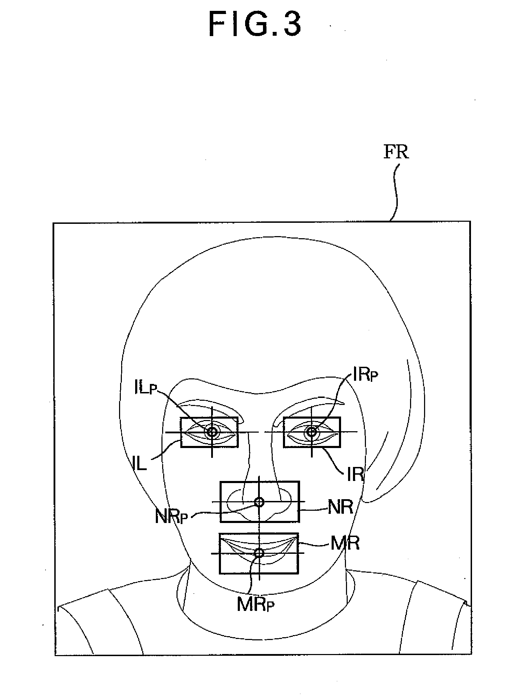

A summary of the process performed by the image processing apparatus 15 will now be described with reference to FIGS. 2 and 3.

FIG. 2 shows an example of an image (photographed image) photographed by the image pickup apparatus 12 and inputted to the image processing apparatus 15.

In the image 31 in FIG. 2, a user 11 positioned in front of a specific background is photographed, and the image 31 includes at least the face of the user 11.

The image processing apparatus 15 uses a coordinate system in which the top left corner of the image is the point of origin, the right direction (horizontal direction) of the diagram is the (positive) X direction, and the top direction (vertical direction) of the diagram is the (positive) Y direction, as shown in FIG. 2.

The image processing apparatus 15 extracts (specifies) areas of the face of the user 11 included in the image 31 when the image 31 shown in FIG. 2 is inputted, for example.

In view of this, FIG. 3 shows an image (facial image) FR including the areas of the face extracted from the image 31 in FIG. 2.

Also, the image processing apparatus 15 extracts (specifies) a left eye area IL, a representative point ILp representing the area IL, a right eye area IR, and a representative point IRp representing the area IR in the facial image FR.

Furthermore, the image processing apparatus 15 extracts (specifies) a nose area NR, a representative point NRp representing the area NR, a mouth area MR, and a representative point MRp representing the area MR in the facial image FR.

Hereinbelow are described the detailed configurations for the image pickup apparatus 12 that photographs the image 31 shown in FIG. 2 and supplies it to the image processing apparatus 15. Also described is the image processing apparatus 15 that extracts (specifies) the facial image FR, the left eye area IL and its representative point ILp, the right eye area IR and its representative point IRp, the nose area IR and its representative point NRp, and the mouth area MR and its representative point MRp from the supplied image 31.

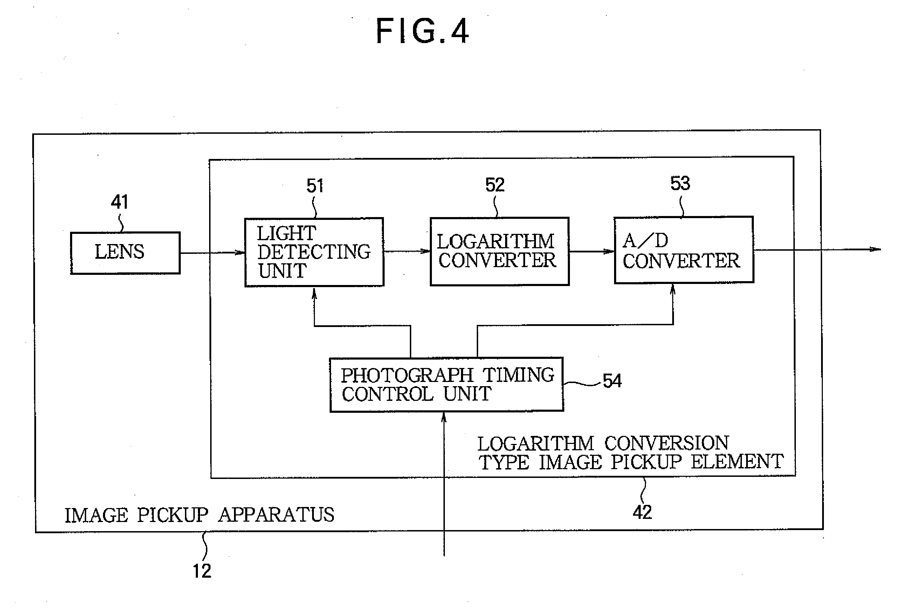

FIG. 4 is a block diagram showing a detailed structural example of the image pickup apparatus 12 in FIG. 1.

The image pickup apparatus 12 is configured from a lens 41 and a logarithm conversion type image pickup element 42.

The logarithm conversion type image pickup element 42 is an HDRC (high dynamic range CMOS (complementary metal oxide semiconductor)) or another such logarithm conversion type image pickup element, for example, and is configured so as to include a light detecting unit 51, a logarithm converter 52, an A/D converter 53, and a photograph timing control unit 54.

The light emitted from subject (user 11) photographed by the image pickup apparatus 12 (or the light reflected by the subject) is directed to the lens 41 and focused on the light detecting surface (not shown) of the light detecting unit 51 of the logarithm conversion type image pickup element 42.

The light detecting unit 51 is configured from a light receiving element or the like composed of a plurality of photodiodes, for example. The light detecting unit 51 converts the light from the subject focused by the lens 41 into an electric charge corresponding to the brightness (illuminance) of the irradiated light, and stores the converted electrical charge. The light detecting unit 51 supplies the stored electrical charge to the logarithm converter 52 in synchronization with the control signal supplied from the photograph timing control unit 54.

The logarithm converter 52 is configured from a plurality of MOSFETs (metal oxide semiconductor field effect transistors), for example. The logarithm converter 52 uses the sub-threshold characteristics of the MOSFETs to create analog electric signals by converting the electrical charges supplied from the light detecting unit 51 into voltage values substantially proportionate to the logarithm of the number of electrical charges (the strength of the electric current) for each pixel (the logarithm of the amount of light from the subject). The logarithm converter 52 supplies these created analog electric signals to the A/D converter 53.

The A/D converter 53 converts the analog electric signals to digital image data in synchronization with the control signals supplied from the photograph timing control unit 54. For example, when the analog signals are converted to 14-bit unsigned binary digital image data the pixel vales of the image data range from 0 for the darkest to $2^{14}-1$ for the brightest. The A/D converter 53 supplies the pixel values of the converted digital image data to an image processing apparatus 112.

Thus, the image pickup apparatus 12 outputs the pixel values proportionate to the logarithm of the brightness (amount of incident light) of the light from the subject directed to the light detecting unit 51. The details of the logarithm conversion type image pickup element are disclosed in Japanese Domestic Republication No. 7-506932, for example.

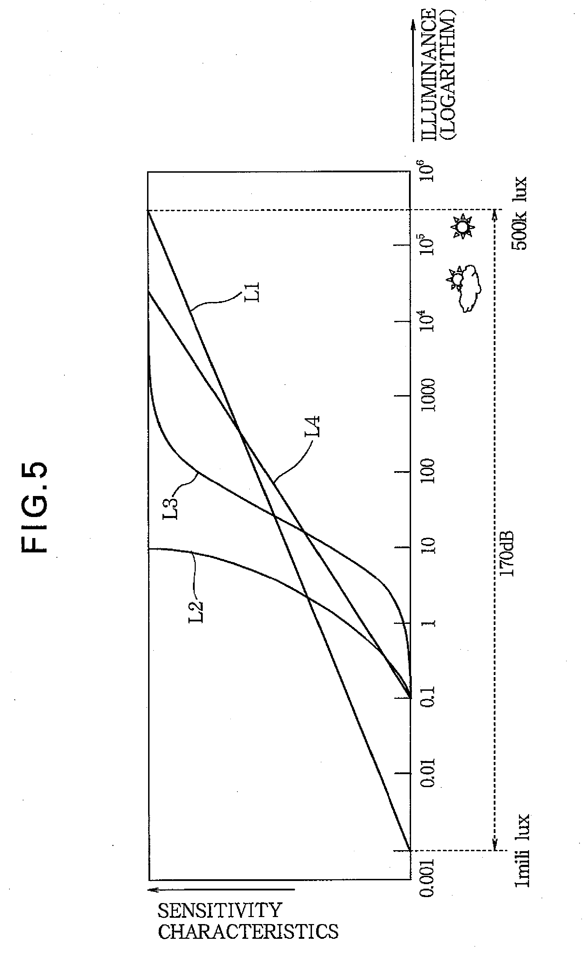

FIG. 5 is a graph showing the sensitivity characteristics of the logarithm conversion type image pickup element 42, a CCD image pickup element, a silver salt film, and the human eye.

The horizontal axis in FIG. 5 shows the logarithmic values of the illuminance (in units of lux) of incident light, and the vertical axis shows sensitivity in relation to the illuminance of incident light. The curve (straight line) L1 indicates the sensitivity characteristics of the logarithm conversion type image pickup element 42, the curve L2 indicates the sensitivity characteristics of the CCD image pickup element, the curve L3 indicates the sensitivity characteristics of the silver salt film, and the curve (straight line L4) indicates the sensitivity characteristics of the human eye.

The logarithm conversion type image pickup element 42 outputs pixel values substantially proportionate to the logarithm of the incident light as described above, whereby the subject can be photographed without saturating the capacity of the photodiodes or the MOSFETs constituting the logarithm conversion type image pickup element 42. The subject can also be photographed at a dynamic range that is about 170 dB and is wider than that of the CCD image pickup element, the silver salt film, or the human eye. The range extends from about 1 mlx to about 500 klx, which is greater than the luminosity of the sun.

Therefore, the amount of incident light does not need to be adjusted by adjusting the aperture or the shutter speed. This is because the image pickup apparatus 12 that uses the logarithm conversion type image pickup element 42 does not generate luminosity clipping in the luminosity range in which a human subject can be recognized. Specifically, the image pickup apparatus 12 can faithfully photograph the detailed luminosity distribution of the subject without adjusting the amount of incident light.

For example, when a photograph of the area in front of a car is taken from inside the car during the daytime and sunlight enters in a field of angular view, the luminosity distribution between the sunlight and the road is faithfully reproduced in the image photographed by the image pickup apparatus 12 without adjusting the amount of incident light. Also, when the area in front of a car is photographed from inside the car during the nighttime and the headlights of oncoming cars are visible from the front, the luminosity distribution spanning from the light of the oncoming headlights to areas not illuminated by the headlights of the photographer's car is faithfully reproduced in the image photographed by the image pickup apparatus 12 without adjusting the amount of incident light.

The CCD image pickup element has a smaller dynamic range than the human eye, as shown in FIG. 5. Therefore, the aperture or shutter speed must be adjusted in an image pickup apparatus that uses a CCD image pickup element so that the illuminance of the incident light fits into the dynamic range of the CCD image pickup element.

However, when the range of the illuminance of the light from the subject exceeds the dynamic range of the CCD image pickup element, luminosity clipping occurs wherein the pixel values of the pixels of bright areas of the subject are restricted to the maximum pixel value that can be outputted by the CCD image pickup element, and the pixel values of the pixels of dark areas of the subject are restricted to the minimum pixel value that can be outputted by the CCD image pickup element. Also, when the amount of incident light has been adjusted, for example, pixel value fluctuations resulting from the incident light adjustment occur, wherein the amount of incident light fluctuates in areas in which the luminosity of the subject does not fluctuate, and the pixel values in these areas fluctuate. Specifically, in an image pickup apparatus that uses a conventional CCD image pickup element, the pixel values fluctuate due to reasons other than the luminosity of the subject fluctuating or the subject moving.

Also, with the CCD image pickup element and the silver salt film, the sensitivity characteristics are not proportionate to the logarithm of the illuminance of the incident light due to gamma characteristics and other such reasons, as shown by the curves L2 and L3, whereas with the logarithm conversion type image pickup element 42, the sensitivity characteristics are substantially proportionate to the logarithm of the illuminance of the incident light.

Thus, the image pickup apparatus 12 that uses the logarithm conversion type image pickup element 42 does not suffer the effects of the occurrence of luminosity clipping, of adjusting the amount of incident light, or of gamma characteristics, and the pixel values of the images photographed by the image pickup apparatus 12 fluctuate so as to faithfully reflect fluctuation in the luminosity of the subject and subject movement. Specifically, the pixel values (difference values) of each pixel in the difference images resulting from the difference in images between frames are values at which fluctuation in the luminosity of the subject and subject movement are faithfully reflected.

Also, since the pixel values of the images outputted from the image pickup apparatus 12 are substantially proportionate to the logarithm of the amount of incident light, the pixel value distribution in the images from photographing the subject is reflected in substantially the same manner as the reflectance distribution of the subject, regardless of the brightness (illuminance) of the light directed to the subject. For example, when a subject with a ratio of maximum to minimum reflectance of 10:1 is photographed while irradiated with light in which the difference in illuminance is about 100 times between the first and second photographs, the widths of the histograms expressing the pixel value distributions of the first and second images are substantially the same ($1 = \log_{10}10$). When the pixel values of the images are proportionate to the amount of incident light, the difference between the widths of the histograms expressing the pixel value distributions of the first and second images is about 100 times.

Furthermore, when the luminosity of the subject fluctuates at substantially the same rate, regardless of the luminosity (reflectance) distribution of the subject, the fluctuation values of the pixel values of the images from photographing the subject are substantially the same. For example, when two areas in the subject have a luminosity ratio of 100:1, the illuminance of the light directed to the subject changes substantially uniformly, and when the luminosity of the subject fluctuates at + 5% of substantially the same rate, the fluctuation values of the pixel values for the two areas are substantially the same ($\log_{10}1.05$). When the pixel values are proportionate to the amount of incident light, the difference in the fluctuation values of the pixel values for the two images is about 100 times.

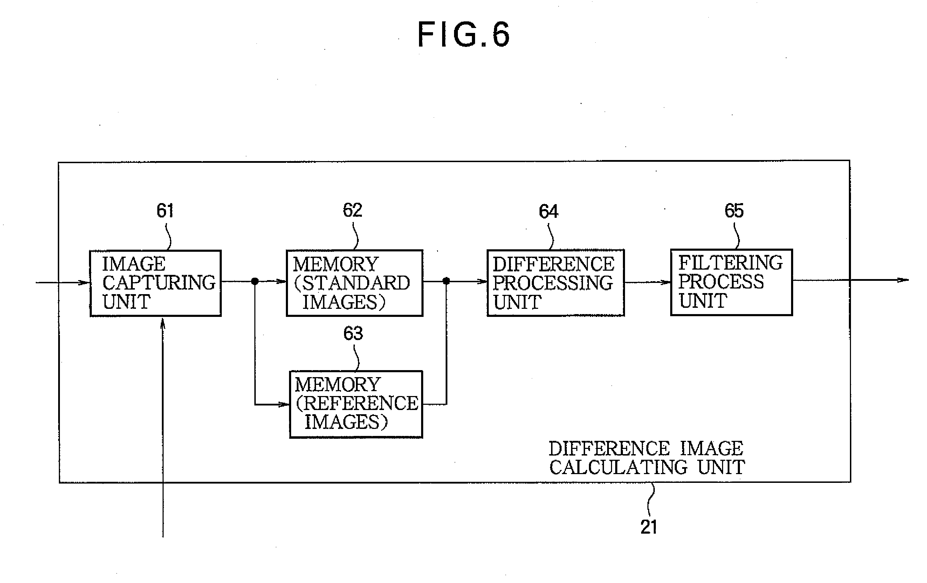

FIG. 6 is a block diagram showing a detailed structural example of the difference image calculating unit 21 in FIG. 1.

The difference image calculating unit 21 is configured from an image capturing unit 61, memory 62 and 63, a difference processing unit 64, and a filtering process unit 65.

The image capturing unit 61 captures the photographed images supplied from the image pickup apparatus 12. Images (standard images) photographed while the user 11 is not irradiated with light by the lighting apparatus 13 and images (lighted images) photographed while the user 11 is irradiated with light by the lighting apparatus 13 as described above are alternately inputted (supplied) to the image capturing unit 61.

The image capturing unit 61 determines whether the photographed images from the image pickup apparatus 12 are standard images or lighted images according to determination signals from the timing control apparatus 14. When the photographed images from the image pickup apparatus 12 are standard images, the image capturing unit 61 supplies the captured photographed images (standard images) to the memory 62. When the photographed images from the image pickup apparatus 12 are lighted images, the image capturing unit 61 supplies the captured photographed images (lighted images) to the memory 63.

The memory 62 and 63 respectively store the standard images and lighted images supplied from the image capturing unit 61, and supply them to the difference processing unit 64 as necessary.

The difference processing unit 64 calculates difference images from the standard images stored in the memory 62 and the lighted images stored in the memory 63, and supplies the difference images to the filtering process unit 65. Specifically, the difference processing unit 64 calculates difference images by subtracting the pixel values of the pixels constituting the standard images from the pixel values of the pixels constituting the lighted images by using the corresponding pixels.

The filtering process unit 65 filters (performs a filtering process on) the difference images from the difference processing unit 64, and supplies the processed difference images to the facial area extracting unit 22 (FIG. 1). The filtering process can be a mosaic process, for example, wherein the difference images are divided into a plurality of blocks of a specific size, and the pixel values of all the pixels in the blocks are used as the average of the pixel values of the pixels in the blocks.

Another example of a filtering process that can be used is a process performed for all of the pixels in the difference images, wherein, when the pixels in the center of the blocks are set as objective pixels, the pixel values of the objective pixels are corrected to values close to the pixel values of the surrounding pixels (in the blocks).

Specifically, the filtering process performed by the filtering process unit 65 should have the effects of eliminating (reducing) singular points that singular pixel values have in relation to their surrounding pixels when the pixels are processed by the subsequent facial area extracting unit 22, face orientation determining unit 23, and facial organ extracting unit 24. In other words, the filtering process can be made to function as a low-pass filter that smoothes out curves (including row pixel value total curves and column pixel value total curves) when the curves are totaled from the pixel values of the pixels in the facial area extracting unit 22 and the like.

When a mosaic process is used as the filtering process, it is possible to allot the averages of the pixel values of the pixels in the blocks to the pixel value of one pixel instead of all the pixels in the blocks, to reduce (compress) the entire number of pixels in the filtered difference images, and to reduce the amount of information processing for the difference images. For example, when the average of four pixels composed of two pixels in the horizontal direction and two pixels vertical direction of the blocks is allotted to one pixel, the number of pixels after filtering can be 1/4 the number of pixels before filtering.

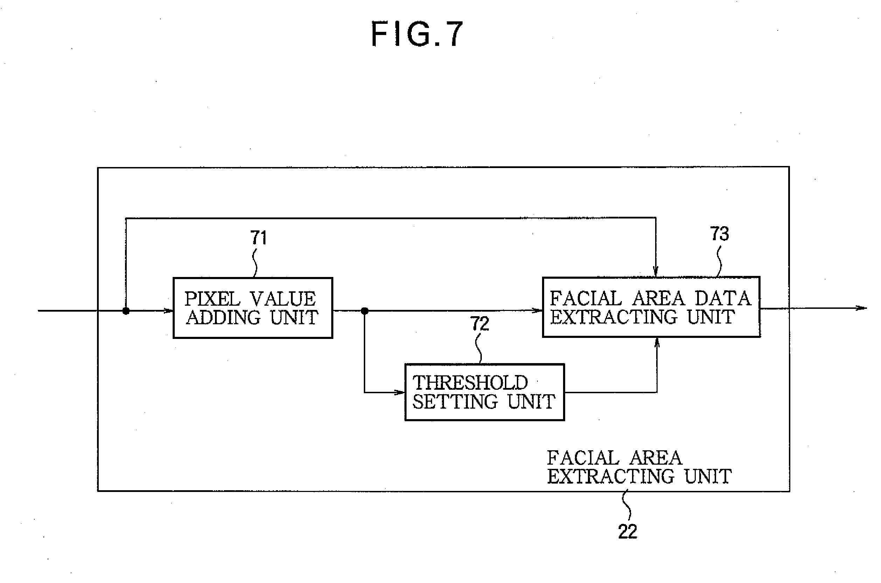

FIG. 7 is a block diagram showing a detailed structural example of the facial area extracting unit 22 in FIG. 1.

The facial area extracting unit 22 is configured from a pixel value adding unit 71, a threshold setting unit 72, and a facial area data extracting unit 73.

The difference images (after filtering) supplied from (the filtering process unit 65 of) the difference image calculating unit 21 are supplied to the pixel value adding unit 71 and the facial area data extracting unit 73.

The pixel value adding unit 71 adds the pixel values of the difference images in each row in the horizontal or vertical direction and determines the pixel total value $V_i$ or $W_i$ of the difference images for each row in the vertical or horizontal direction.

Specifically, the pixel total value $V_i$ of a difference image for each row in the vertical direction is determined by the following equation (1), wherein N is the number of pixels of the difference image in the horizontal direction (X direction), M is the number of pixels in the vertical direction (Y direction), and $G_{ij}$ (i = 1 through N, j = 1 through M) is the pixel value of the pixel at the $i^{th}$ coordinate in the horizontal direction and the $j^{th}$ coordinate in the vertical direction of the difference image.

[Eq. 1]

$$Vi = \sum_{j=1}^{M} G_{ij} \qquad (i=1, 2, \cdots, N)$$

Similarly, the pixel total value $W_j$ of the difference image for each row (column) in the horizontal direction can be determined by the following equation (2)

[Eq. 2]

$$Wj = \sum_{i=1}^{N} G_{ij} \qquad (j=1, 2, \cdots, M)$$

The pixel value adding unit 71 supplies the pixel total values $V_i$ or $W_j$ of the difference image for each row in the vertical or horizontal direction (hereinafter occasionally referred to as the pixel total value $V_i$ or $W_j$ of the difference image) to the threshold setting unit 72 and the facial area data extracting unit 73.

The threshold setting unit 72 uses the pixel total values $V_i$ or $W_j$ supplied from the pixel value adding unit 71 to calculate and set (determine) a threshold $TH_X$ or $TH_Y$ for distinguishing the facial areas of the user 11 from other areas in the horizontal or vertical direction of the difference image.

Specifically, the threshold setting unit 72 calculates the average of the pixel total values $V_i$ of the difference image as the threshold $TH_X$ for distinguishing the facial areas of the user 11 from other areas in the horizontal direction of the difference image. The threshold $TH_X$ can be determined by the following equation (3).

[Eq. 3]

$$TH_X = \frac{\sum_{i=1}^{N} Vi}{N}$$

The threshold setting unit 72 also calculates the average of the pixel total values $W_j$ of the difference image as the threshold $TH_Y$ for distinguishing the facial areas of the user 11 from other areas in the vertical direction of the difference image. The threshold $TH_Y$ can be determined by the following equation (4).

[Eq. 4]

$$TH_Y = \frac{\sum_{j=1}^{M} Wj}{M}$$

The threshold setting unit 72 then supplies the calculated threshold $TH_X$ or $TH_Y$ to the facial area data extracting unit 73.

The facial area data extracting unit 73 specifies the facial areas of the user 11 in the difference image on the basis of the pixel total values $V_i$ and $W_j$ of the difference image supplied from the pixel value adding unit 71, and the thresholds $TH_X$ and $TH_Y$ supplied from the threshold setting unit 72.

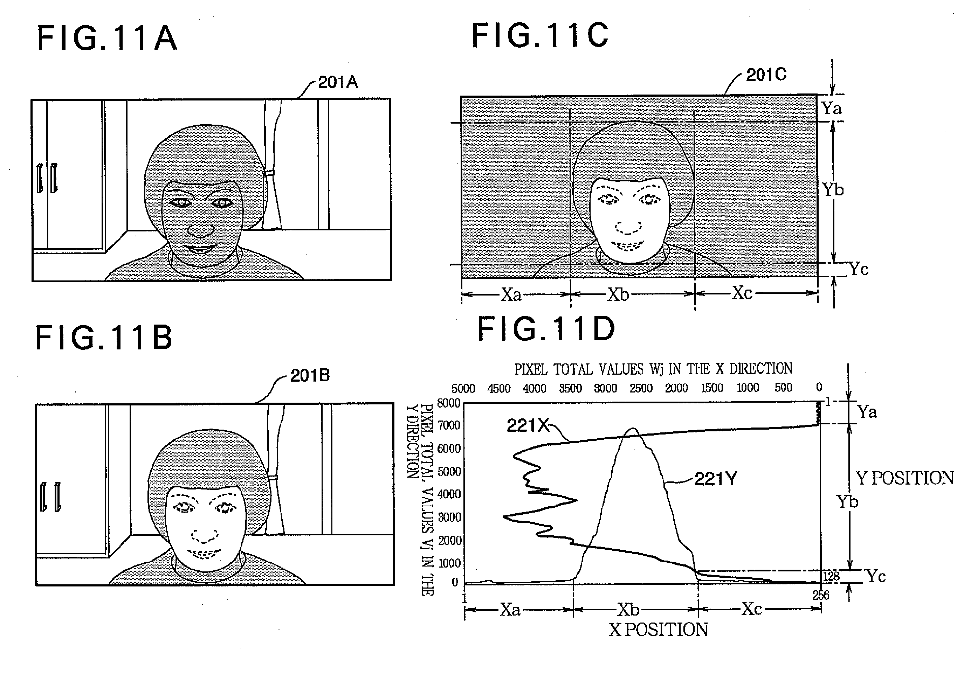

Specifically, the facial area data extracting unit 73 determines a row pixel value total curve (the row pixel value total curve 221Y in FIG. 11D, described later) by plotting the pixel total values $V_i$ for each vertically aligned row in the difference image sequentially in the horizontal direction (i = 1 through N). The facial area data extracting unit 73 also determines a column pixel value total curve (the column pixel value total curve 221X in FIG. 11D, described later) by plotting the pixel total values $W_j$ for each horizontally aligned row in the difference image sequentially in the vertical direction (j = 1 through M).

Next, the facial area data extracting unit 73 specifies, as the facial areas of the user 11, the range in the horizontal direction in which the row pixel value total curve exceeds the threshold $TH_X$ supplied from the threshold setting unit 72, and the range in the vertical direction in which the column pixel value total curve exceeds the threshold $TH_Y$.

The facial area data extracting unit 73 then supplies the facial area information specifying the facial areas of the user 11 to the face orientation determining unit 23 (FIG. 1), together with the difference image supplied from the difference image calculating unit 21 (FIG. 1).

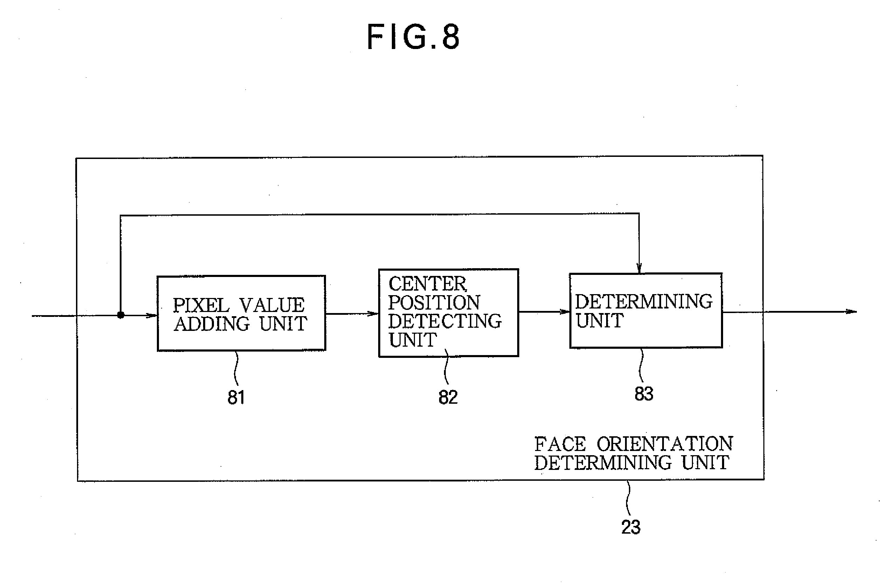

FIG. 8 is a block diagram showing a detailed structural example of the face orientation determining unit 23 in FIG. 1.

The face orientation determining unit 23 is configured from a pixel value adding unit 81, a center position detecting unit 82, and a determining unit 83.

The difference images and facial area information from the facial area extracting unit 22 (FIG. 7) is supplied to the pixel value adding unit 81 and the determining unit 83.

The pixel value adding unit 81 calculates the pixel total values $V'_i$ for each row in the vertical direction for the facial images in the difference images (hereinafter occasionally referred to as the pixel total values $V'_i$ of the facial images) specified by the facial area information, and supplies these values to the center position detecting unit 82. The subscript variable i' indicates the horizontal position extracted as a facial image, where i is 1 through N.

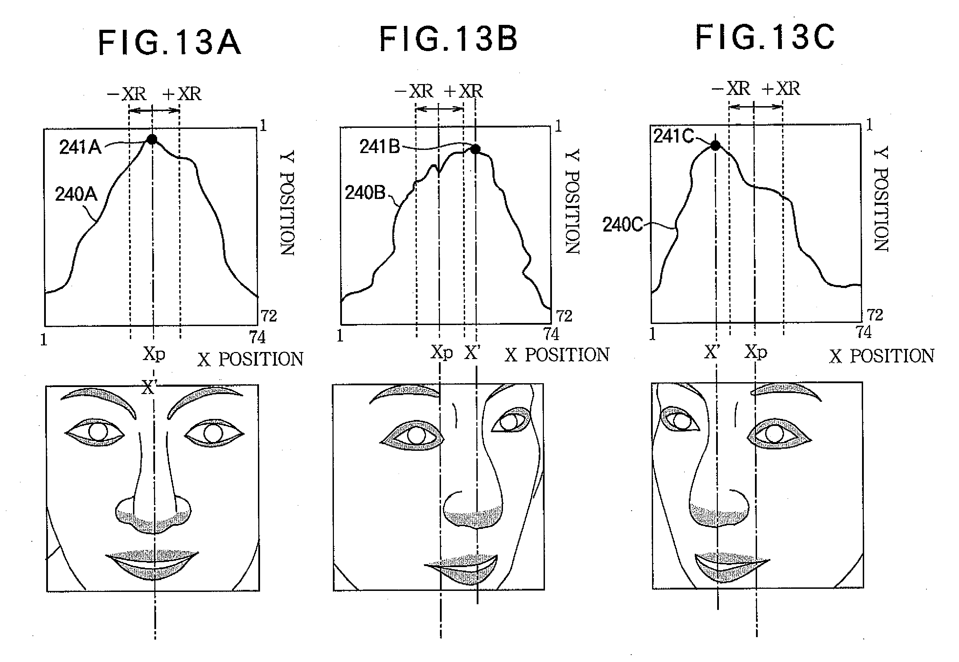

The center position detecting unit 82 uses the row pixel value total curve (for example, the row pixel value total curve 240B or the like in FIG. 13A, described later) obtained by plotting the pixel total value $V'_i$ of the facial images sequentially in the horizontal direction to determine the center position (barycentric position) X' of the face of the user 11 in the horizontal direction, and supplies this information to the determining unit 83.

The determining unit 83 determines the orientation of the face of the user 11 according to whether or not the center position X' of the face of the user 11 in the horizontal direction as obtained by the center position detecting unit 82 is positioned in a range within a specific distance $\pm$ XR from the center point Xp of the facial image in the horizontal direction, or whether the center position is located either to the left or right of this range.

Specifically, the determining unit 83 determines that the orientation of the face of the user 11 is to the left (the user 11 is facing to the left when the photographed image is viewed from the front) when the horizontal center position X' of the face of the user 11 is located in the range (second range) to the left (the small side) of a small position (Xp - XR) separated from the horizontal center Xp of the facial image by a distance XR.

Also, the determining unit 83 determines that the user 11 is facing forward when the horizontal center position X' of the face of the user 11 is located in the range (first range) between the small position (Xp - XR) separated from the horizontal center point Xp of the facial image by a distance XR, and a large position (Xp + XR) separated from the center point Xp by a distance XR.

Furthermore, the determining unit 83 determines that the orientation of the face of the user 11 is to the right (the user 11 is facing to the right when the photographed images is viewed from the front) when the horizontal center position X' of the face of the user 11 is located in the range (third range) to the right (the large side) of a large position (Xp + XR) separated from the horizontal center Xp of the facial image by a distance XR.

The determining unit 83 then supplies the results of determining the orientation of the face of the user 11 to the facial organ extracting unit 24 (FIG. 1) together with the difference image and the facial area information (supplied from the facial area extracting unit 22).

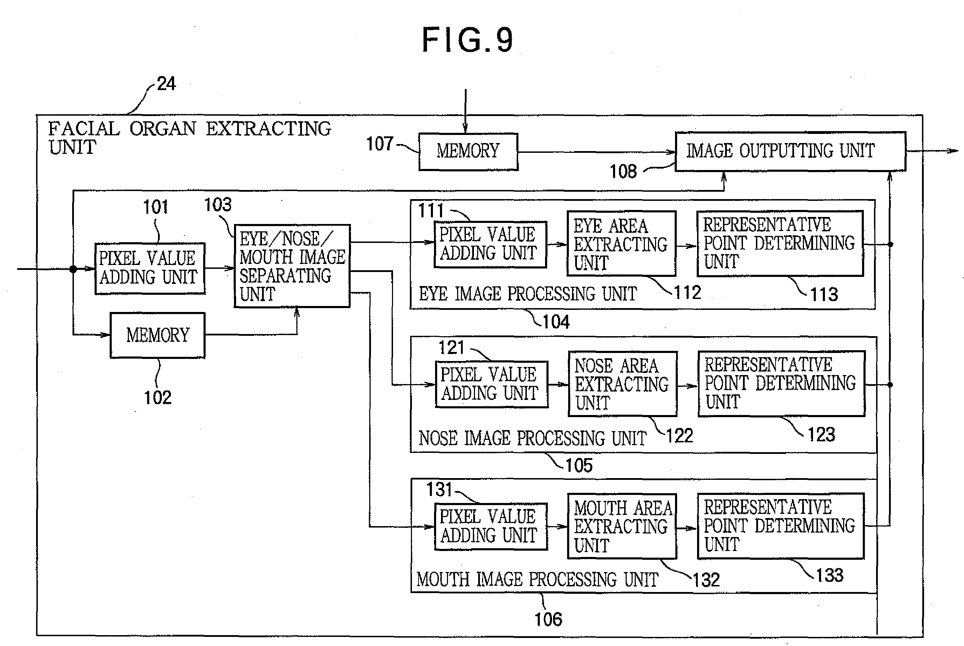

FIG. 9 is a block diagram showing a detailed structural example of the facial organ extracting unit 24 in FIG. 1.

The facial organ extracting unit 24 is configured from a pixel value adding unit 101, memory 102, an eye/nose/mouth image separating unit 103, an eye image processing unit 104, a nose image processing unit 105, a mouth image processing unit 106, memory 107, and an image outputting unit 108.

Also, the eye image processing unit 104 is configured from a pixel value adding unit 111, an eye area extracting unit 112, and a representative point determining unit 113; the nose image processing unit 105 is configured from a pixel value adding unit 121, a nose area extracting unit 122, and a representative point determining unit 123; and the mouth image processing unit 106 is configured from a pixel value adding unit 131, a mouth area extracting unit 132, and a representative point determining unit 133.

The facial organ extracting unit 24 is supplied with the difference images, the facial area information, and the determination results from the face orientation determining unit 23 (FIG. 8). Of these difference images, facial area information, and determination results, the difference images and the facial area information are supplied to the pixel value adding unit 101 and the memory 102. Also, the facial area information and the determination results are supplied to the image outputting unit 108.

The pixel value adding unit 101 calculates the pixel total values $W'_j$ for each horizontal row of the facial images in the difference images (hereinafter occasionally referred to as pixel total values $W'_j$ of the facial images) as specified by the facial area information, and supplies these values to the eye/nose/mouth image separating unit 103. The subscript variable j' indicates the horizontal position extracted as a facial image, where j is 1 through M.

The memory 102 stores the difference images and the facial area information, and supplies them to the eye/nose/mouth image separating unit 103 as necessary.

The eye/nose/mouth image separating unit 103 (hereinafter referred to simply as the image separating unit 103) uses the pixel total values $W'_j$ of the facial images from the pixel value adding unit 101 and separates the facial images specified by the facial area information in the difference images stored in the memory 102 into three categories (in the vertical direction): images including areas of the eyes (hereinafter referred to as eye images), images including areas of the nose (hereinafter referred to as nose images), and images including areas of the mouth (hereinafter referred to as mouth images). The image separating unit 103 then supplies the separated eye images, nose images, and mouth images to the eye image processing unit 104, the nose image processing unit 105, and the mouth image processing unit 106, respectively.

The eye image processing unit 104 specifies areas IL of the left eye of the user 11 and representative points ILp representing these areas IL, and areas IR of the right eye and representative points IRp representing these areas IR, as shown in FIG. 3, on the basis of the eye images supplied from the image separating unit 103.

Specifically, the pixel value adding unit 111 calculates the pixel total values $V'_{ip'}$ for each vertical row and the pixel total values $W'_{jp'}$ for each horizontal row in the eye images (hereinafter occasionally referred to as the pixel total values $V'_{ip'}$ and $W'_{jp'}$ of the eye images), and supplies these values to the eye area extracting unit 112. The subscript variable ip' indicates the horizontal positions extracted as the eye image, where i is 1 through N, and the variable jp' indicates the vertical positions extracted as the eye image, where j is 1 through M.

The eye area extracting unit 112 specifies (extracts) the areas of the eyes of the user 11 by using the row pixel value total curve obtained by sequentially plotting the pixel total values $V'_{ip'}$ of the eye image in the horizontal direction, and the column pixel value total curve obtained by sequentially plotting the pixel total values $W'_{jp'}$ of the eye image in the vertical direction (hereinbelow, these curves are referred to simply as the row pixel value total curve and column pixel value total curve of the eye image). The eye area extracting unit 112 supplies the information specifying the areas of the eyes of the user 11 to the representative point determining unit 113, together with the eye images.

The representative point determining unit 113 specifies the areas of the eyes in the eye images from the information specifying the areas of the eyes of the user 11, and recalculates the row pixel value total curve and the column pixel value total curve for the specified areas of the eyes. The representative point determining unit 113 then uses the row pixel value total curve and column pixel value total curve recalculated for the areas of the eyes to specify (determine) representative points that represent the positions of the eyes of the user 11. The representative points of the eyes are not limited to indicating the center of the eyes (the irises) or the positions of the pupils, but they are substantially in the same position for each user.

The representative point determining unit 113 then supplies the information specifying the areas of the eyes supplied from the eye area extracting unit 112 and the information specifying the representative points of the eyes (referred to collectively as eye area information) to the image outputting unit 108.

The eye image processing unit 104 performs the process described above for both eyes.

The nose image processing unit 105 specifies the nose area NR of the user 11 and the representative point NRp that represents this area NR, as shown in FIG. 3, on the basis of the nose images supplied from the image separating unit 103.

Specifically, the pixel value adding unit 121 calculates the pixel total values $V'_{iq'}$ for each vertical row and the pixel total values $W'_{jq'}$ for each horizontal row in the nose images (hereinafter occasionally referred to as the pixel total values $V'_{iq'}$ and $W'_{jq'}$ of the nose images), and supplies these values to the nose area extracting unit 122. The subscript variable iq' indicates the horizontal positions extracted as the nose image, where i is 1 through N, and the variable jq' indicates the vertical positions extracted as the nose image, where j is 1 through M.

The nose area extracting unit 122 specifies (extracts) the areas of the nose of the user 11 by using the row pixel value total curve obtained by sequentially plotting the pixel total values $V'_{iq'}$ of the nose image in the horizontal direction, and the column pixel value total curve obtained by sequentially plotting the pixel total values $W'_{jq'}$ of the nose image in the vertical direction (hereinbelow, these curves are referred to simply as the row pixel value total curve and column pixel value total curve of the nose image). The nose area extracting unit 122 supplies the information specifying the areas of the nose of the user 11 to the representative point determining unit 123, together with the nose images.

The representative point determining unit 123 specifies the areas of the nose in the nose images from the information specifying the areas of the nose of the user 11, and recalculates the row pixel value total curve and the column pixel value total curve for the specified areas of the nose. The representative point determining unit 123 then uses the row pixel value total curve and column pixel value total curve recalculated for the areas of the nose to specify (determine) representative points that represent the positions of the nose of the user 11. The representative points of the nose are not limited to indicating the center position of the nose, but they are substantially in the same position for each user.

The representative point determining unit 123 then supplies the information specifying the areas of the nose supplied from the nose area extracting unit 122 and the information specifying the representative points of the nose (referred to collectively as nose area information) to the image outputting unit 108.

The mouth image processing unit 106 specifies the mouth area MR of the user 11 and the representative point MRp that represents this area MR, as shown in FIG. 3, on the basis of the mouth images supplied from the image separating unit 103.

Specifically, the pixel value adding unit 131 calculates the pixel total values $V'_{ir'}$ for each vertical row and the pixel total values $W'_{jr'}$ for each horizontal row in the mouth images (hereinafter occasionally referred to as the pixel total values $V'_{ir'}$ and $W'_{jr'}$ of the mouth images), and supplies these values to the mouth area extracting unit 132. The subscript variable ir' indicates the horizontal positions extracted as the mouth image, where i is 1 through N, and the variable jr' indicates the vertical positions extracted as the mouth image, where j is 1 through M.

The mouth area extracting unit 132 specifies (extracts) the areas of the mouth of the user 11 by using the row pixel value total curve obtained by sequentially plotting the pixel total values $V'_{i3'}$ of the mouth image in the horizontal direction, and the column pixel value total curve obtained by sequentially plotting the pixel total values $W'_{j3'}$ of the mouth image in the vertical direction (hereinbelow, these curves are referred to simply as the row pixel value total curve and column pixel value total curve of the mouth image). The mouth area extracting unit 132 supplies the information specifying the areas of the mouth of the user 11 to the representative point determining unit 133, together with the mouth images.

The representative point determining unit 133 specifies the areas of the mouth in the mouth images from the information specifying the areas of the mouth of the user 11, and recalculates the row pixel value total curve and the column pixel value total curve for the specified areas of the mouth. The representative point determining unit 133 then uses the row pixel value total curve and column pixel value total curve recalculated for the areas of the mouth to specify (determine) representative points that represent the positions of the mouth of the user 11. The representative points of the mouth are not limited to indicating the center position of the mouth, but they are substantially in the same position for each user.

The representative point determining unit 133 then supplies the information specifying the areas of the mouth supplied from the mouth area extracting unit 132 and the information specifying the representative points of the mouth (referred to collectively as mouth area information) to the image outputting unit 108.

The memory 107 stores the photographed images (standard images or lighted images) supplied from the image pickup apparatus 12 (FIG. 1) and supplies them to the image outputting unit 108 as necessary.

As described above, the facial area information and the determination results are supplied to the image outputting unit 108 from the face orientation determining unit 23 (FIG. 8). The image outputting unit 108 is also supplied with the eye area information, the nose area information, and the mouth area information from the eye image processing unit 104, the nose image processing unit 105, and the mouth image processing unit 106, respectively.

The image outputting unit 108 determines whether or not the photographed images stored in the memory 107 are to be outputted, according to the determination results supplied from the face orientation determining unit 23. Specifically, when the determination results indicate a left orientation or a right orientation, the image outputting unit 108 determines that the photographed images stored in the memory 107 are unsuitable for facial image recognition and does not output them (the photographed images). When the determination results indicate a forward orientation, the image outputting unit 108 determines that the photographed images stored in the memory 107 are suitable for facial image recognition, and outputs the images along with the facial area information, the eye area information, the nose area information, and the mouth area information.

Therefore, facial images can be accurately recognized in the apparatuses that precede the output in which (the image outputting unit 108 of) the image processing apparatus 15 supplies (outputs) the photographed images, because it is possible to obtain only images suitable for facial image recognition and to specify accurate facial areas, eye areas, nose areas, and mouth areas in the photographed images according to the facial area information, the eye area information, the nose area information, and the mouth area information.

The details of the process performed by the image processing apparatus 15 are further described below with reference to the diagrams.

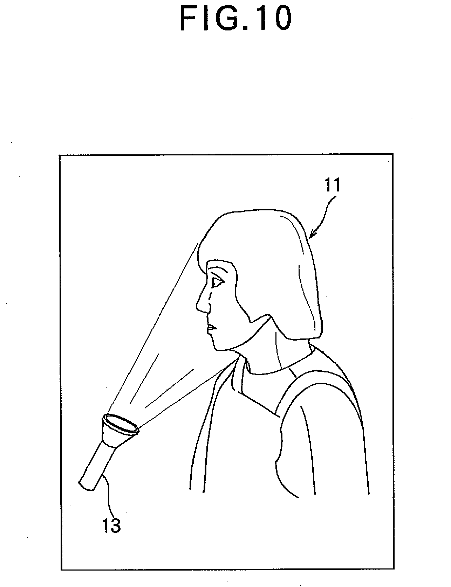

FIG. 10 is a diagram describing the direction from which the user 11 is illuminated with light from the lighting apparatus 13.

The lighting apparatus 13 is disposed so that bright light is directed only to the face of the user 11 at an upward angle in relation to the face of the user 11 as shown, for example, in FIG. 10. The result is a constant brightness, regardless of whether or not the background outside of the face of the user 11 is illuminated with light by the lighting apparatus 13.

The images 201A and 201B in FIG. 11 are sequentially supplied (inputted) to the image processing apparatus 15 as images photographed by the image pickup apparatus 12.

The image 201A in FIG. 11A shows a standard image photographed while the lighting apparatus 13 does not illuminate the user 11. The image 201B in FIG. 11B shows a lighted image photographed while the lighting apparatus 13 disposed as shown in FIG. 10 illuminates the user 11 with bright light.

The pixel values of the pixels in the image 201A in FIG. 11A and the image 201B in FIG. 11B vary in practical terms due to the difference in light reflected by the subject, but the diagrams are simplified because it is difficult to express the differences in all the pixel values.

In the image 201A, the user 11 is exposed only to natural light (surrounding light) without being illuminated by the lighting apparatus 13, and is somewhat dark.

However, in the image 201B, since the surface of the face of the user 11 is illuminated with light by the lighting apparatus 13, the light from the lighting apparatus 13 reflects off the surface of the face of the user 11, and the surface of the face of the user 11 is extremely bright (white in the diagram). In the surface of the face of the user 11, the organs of the face indicated by dotted lines indicate the brightest (whitest) parts due to the reflection of the light from the lighting apparatus 13.

If photographs are taken in similar lighting conditions with a image pickup apparatus that uses a common CCD image pickup element, the pixel values of the areas of the face of the user 11 become saturated in images corresponding to the image 201B, and it is impossible to compare (under the same conditions) the image 201A photographed without light from the lighting apparatus 13, and the image 201B photographed while the user 11 is illuminated with bright light. Accordingly, if a image pickup apparatus 12 having a logarithm conversion type image pickup element is used, luminosity clipping does not occur in luminosity ranges visible to the human eye as described above, and therefore the specific luminosity distribution of the user 11 can be faithfully displayed even in the image 201B photographed while only the face of the user 11 is illuminated with bright light, as shown in FIG. 10. Specifically, a difference image can be obtained from the image 201A photographed without light from the lighting apparatus 13 and the image 201B photographed while the user 11 is illuminated with bright light, without adjusting the amount of incident light.

In view of this, the difference image calculating unit 21 creates the difference image 201C shown in FIG. 11C by calculating the difference (the absolute value of the difference) in pixel values between the pixels of the image 201A (hereinafter referred to as standard image 201A) and the image 201B (hereinafter referred to as lighted image 201B).

In the lighted image 201B, the eyebrows, outlines of the eyes, base of the nose (periphery of the nostrils), and protrusions of the lips in the face of the user 11 as indicated by the dotted lines are distinctly bright (have high pixel values) as described above, and therefore, the eyebrows, outlines of the eyes, base of the nose (periphery of the nostrils), and protrusions of the lips in the face of the user 11 as indicated by the dotted lines are similarly distinctly bright (have high pixel values) in the difference image 201C as well.

Also, the background areas and the areas of the hair of the user 11 in the standard image 201A and the lighted image 201B do not change in brightness (pixel values) with or without light from the lighting apparatus 13, and therefore these pixel values in the difference image 201C are close to 0. In the difference image 201C in FIG. 11C, the pixels (areas) in which the pixel values are close to 0 are shown in gray.

The difference image calculating unit 21 supplies the created difference image 201C to the facial area extracting unit 22.

The pixel value adding unit 71 of the facial area extracting unit 22 determines the row pixel value total curve 221Y shown in FIG. 11D by plotting the pixel total values $V_i$ for each vertical row in the difference image 201C sequentially in the horizontal direction (where i is 1 through N). Also, the pixel value adding unit 71 determines the column pixel value total curve 221X shown in FIG. 11D by plotting the pixel total values $W_j$ for each horizontal row in the difference image 201C sequentially in the vertical direction (where j is 1 through M).

In FIG. 11D, the gradations for the row pixel value total curve 221Y use the bottom horizontal axis and the left vertical axis, wherein the bottom horizontal axis indicates the position in the horizontal direction (the X direction), and the left vertical axis indicates the pixel total values $V_i$ when the pixel values are added for each row in the vertical direction (the Y direction). Also, the gradations for the column pixel value total curve 221X use the top horizontal axis and the right horizontal axis, wherein the right horizontal axis indicates the position in the vertical direction (the Y direction), and the top vertical axis indicates the pixel total values $W_j$ when the pixel values are added for each row in the horizontal direction (the X direction). In FIG. 11D, N = 256 and M = 128.

When the column pixel value total curve 221X and the row pixel value total curve 221Y shown in FIG. 11D are compared with the difference image 201C shown in FIG. 11C, the row pixel value total curve 221Y (pixel total values $V_i$) increases in the range Xb in which the areas of the face lie in the horizontal direction (X direction) of the difference image 201C, and the column pixel value total curve 221X (pixel total values $W_j$) increases in the range Yb in which the areas of the face lie in the vertical direction (Y direction) of the difference image 201C.

In view of this, the threshold setting unit 72 of the facial area extracting unit 22 calculates a threshold $TH_X$ for distinguishing the facial areas of the user 11 from other areas in the horizontal direction of the difference image by the above equations (3) and (4). The threshold setting unit 72 also calculates a threshold $TH_Y$ for distinguishing the facial areas of the user 11 from other areas in the vertical direction of the difference image. The calculated thresholds $TH_X$ and $TH_Y$ are then supplied to the facial area data extracting unit 73. The thresholds $TH_X$ and $TH_Y$ may be determined by data (statistical data) from experiments, in addition to the determination method using the above Equations (3) and (4).

The facial area data extracting unit 73 specifies the positions of the facial areas of the user 11 in the difference image on the basis of the thresholds $TH_X$ and $TH_Y$ supplied from the threshold setting unit 72.

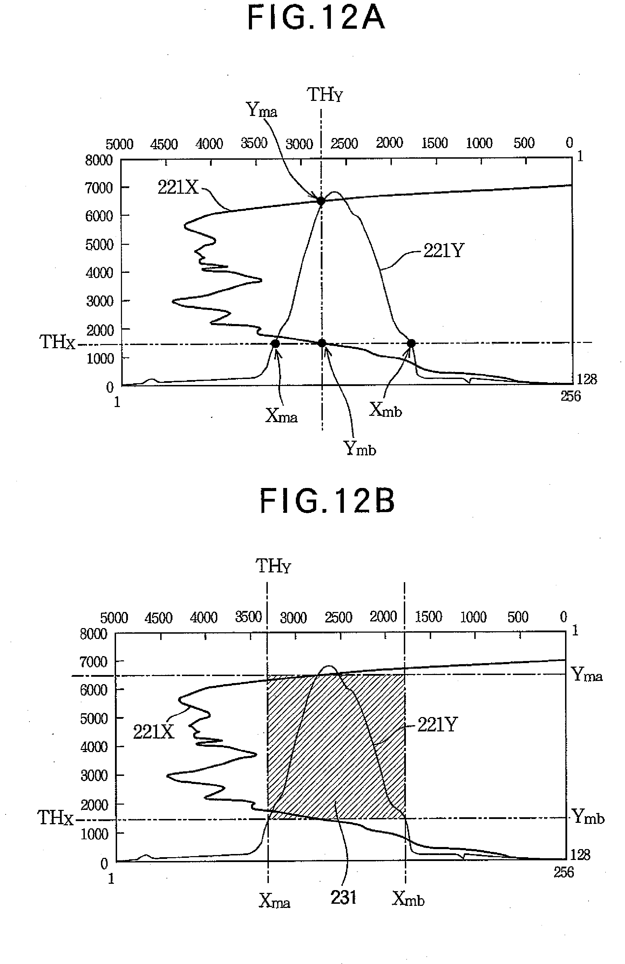

Specifically, the facial area data extracting unit 73 calculates the locations $X_{ma}$ and $X_{mb}$ at which the row pixel value total curve 221Y intersects with the threshold $TH_X$ in the horizontal direction of the difference image 201C, as shown in FIG. 12A.

The facial area data extracting unit 73 also calculates the locations $Y_{ma}$ and $Y_{mb}$ at which the column pixel value total curve 221X intersects with the threshold $TH_Y$ in the vertical direction of the difference image 201C.

The facial area data extracting unit 73 then specifies that the area 231 shown by the slanting lines in FIG. 12B is the area of the face of the user 11. The area is encompassed by the range $X_{ma} \leq i \leq X_{mb}$ in which the row pixel value total curve 221Y is equal to or greater than the threshold $TH_X$, and the range $Y_{ma} \leq j \leq Y_{mb}$ in which the column pixel value total curve 221X is equal to or greater than the threshold $TH_Y$.

The facial area data extracting unit 73 supplies the horizontal locations $X_{ma}$ and $X_{mb}$ and the vertical locations $Y_{ma}$ and $Y_{mb}$ that specify the areas of the face of the user 11 as facial area information to the face orientation determining unit 23 with the difference image 201C.

The pixel value adding unit 81 of the face orientation determining unit 23 calculates the pixel total values $V'_i$ for each vertical row in the facial image in the difference image as specified by the facial area information. The center position detecting unit 82 then uses the row pixel value total curve obtained by sequentially plotting the pixel total values $V'_i$ of the facial image in the horizontal direction to determine the center position (barycentric position) X' of the face of the user 11 in the horizontal direction, and supplies this information to the determining unit 83.

FIG. 13 shows the relationship between the center position (barycentric position) X' of the face of the user 11 in the horizontal direction and the orientation of the face of the user 11 (forward facing, right facing, or left facing).

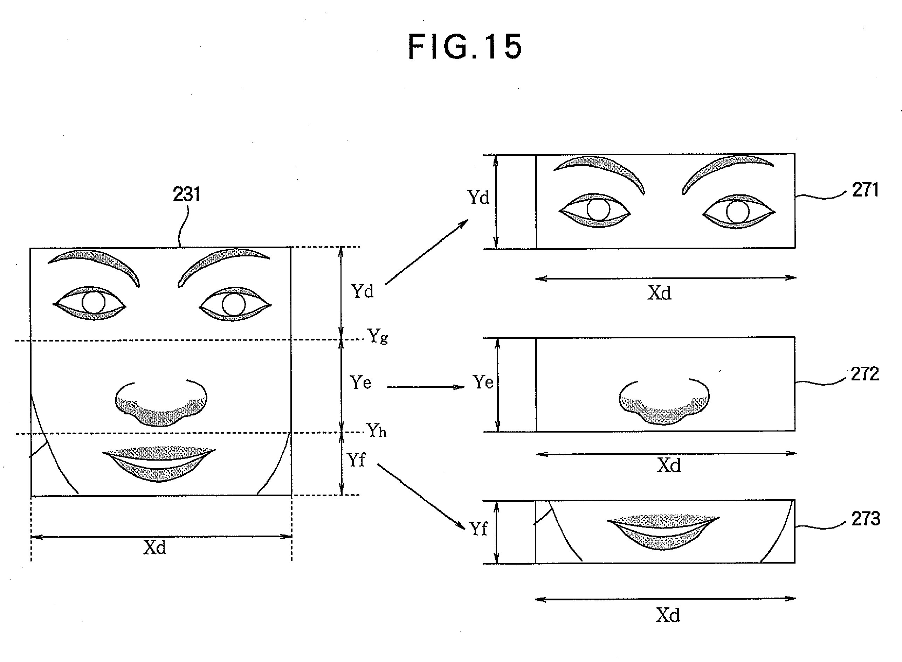

In FIG. 13, the distinctly bright areas (with high pixel values) shown by the dotted lines in FIG. 11C are shown in gray (similar to FIG. 15, described later).

The row pixel value total curve 240A shown at the top of FIG. 13A is obtained by plotting the pixel total values $V'_i$ of the facial image calculated by the pixel value adding unit 81 sequentially in the horizontal direction.

The center position detecting unit 82 sets the position of the maximum value 241A of the row pixel value total curve 240A as the center position (barycentric position) X' of the face of the user 11 in the horizontal direction. This is because in the difference image, as shown at the bottom of FIG. 13A, the pixel values increase (become brighter) for the pixels (shown in gray) corresponding to the areas of the eyebrows, eyes, nose, and mouth in the facial image. Among these areas, however, the areas (surface areas) of the nose and mouth are larger than the areas of the eyebrows and eyes, and therefore the nose and mouth may be assumed to be at the position where the row pixel value total curve reaches its maximum value.

Therefore, the determining unit 83 determines the orientation of the face of the user 11 according to whether or not the center position X', which is assumed to be the center (the position of the nose and mouth) of the face of the user 11, is located either to the left or right within a range of a specific distance $\pm$ XR from the horizontal center point Xp of the facial image.

In FIG. 13A, the center position X' of the face of the user 11 is located in the range (second range) at a specific distance $\pm$ XR from the horizontal center point Xp of the facial image, and therefore the determining unit 83 determines that the user 11 is facing forward.

When the row pixel value total curve 240B shown in FIG. 13B is obtained, the center position detecting unit 82 sets the position of the maximum value 241B of the row pixel value total curve 240B as the horizontal center position X' of the face of the user 11.

The determining unit 83 then determines that the user 11 is facing to the right, because the center position X' of the face of the user 11 is located in a range (third range) to the right (on the greater side) of the position (Xp + XR) greater than the horizontal center position Xp of the facial image by a specific distance XR.

Furthermore, when the row pixel value total curve 240C shown in FIG. 13C is obtained, the center position detecting unit 82 sets the position of the maximum value 241C of the row pixel value total curve 240C as the horizontal center position X' of the face of the user 11.

The determining unit 83 then determines that the user 11 is facing to the left, because the center position X' of the face of the user 11 is located in a range (first range) to the left (on the smaller side) of the position (Xp - XR) smaller than the horizontal center position Xp of the facial image by a specific distance XR.

The determining unit 83 supplies the results of determining the orientation of the face of the user 11 thus obtained to the facial organ extracting unit 24, together with the difference image and the facial area information (supplied from the facial area extracting unit 22).

The pixel value adding unit 101 of the facial organ extracting unit 24 calculates the pixel total values $W'_{j'}$ for each horizontal row in the facial image in the difference image specified by the facial area information (the pixel total values $W'_{j'}$ of the facial image), and supplies these values to the image separating unit 103.

The image separating unit 103 uses the pixel total values $W'_{j'}$ of the facial image supplied from the pixel value adding unit 101 and separates the facial image into three parts: an image including the area of the eyes (eye image), an image including the area of the nose (nose area), and an image including the area of the mouth (mouth image).

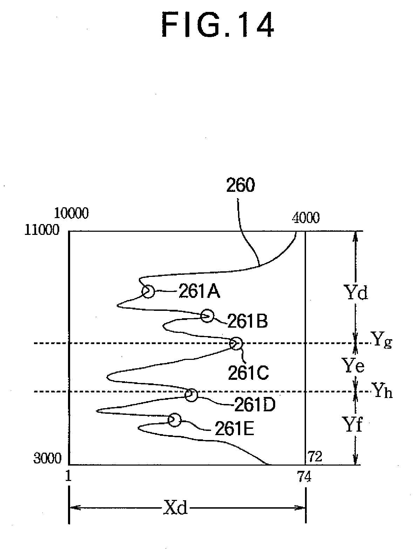

Specifically, the image separating unit 103 determines the column pixel value total curve 260 shown in FIG. 14 by sequentially plotting the pixel total values $W'_{j'}$ of the facial image in the vertical direction.

The image separating unit 103 then detects local minima occurring in the column pixel value total curve 260. In the example shown in FIG. 14, the image separating unit 103 detects the local minima 261A through 261E from the column pixel value total curve 260.

Next, the image separating unit 103 detects, as a border (position) separating the eye image and the nose image vertically (in the vertical direction), the position j in the detected local minima 261A through 261E where the pixel total values $W'_{j'}$ of the facial image reach a minimum.

Furthermore, the image separating unit 103 detects, as a border (position) separating the nose image and the mouth image vertically (in the vertical direction), the position j of the local minimum detected next below the local minimum that is detected as a border vertically separating the eye image and the nose image.

In the example shown in FIG. 14, the position $Y_g$ having the local minimum 261C where the pixel total values $W'_{j'}$ of the facial image reach a minimum in the detected local minima 261A through 261E is detected as the border (position) vertically separating the eye image and the nose image.

Also, the position $Y_h$ of the local minimum 261D, detected next below the local minimum 261C detected as a border vertically separating the eye image and the nose image, is detected as a border (position) vertically separating the nose image and the mouth image.

The image separating unit 103 thereby divides the area (facial image) 231 in the difference image into an image (eye image) 271 including the area of the eyes, an image (nose image) 272 including the area of the nose, and an image (mouth image) 273 including the area of the mouth, as shown in FIG. 15. The image separating unit 103 then supplies the eye image 271 to the eye image processing unit 104, the nose image 272 to the nose image processing unit 105, and the mouth image 273 to the mouth image processing unit 106.

In the image separating unit 103, the border vertically separating the eye image and the nose image is assumed to be located near the center of the area of the face (the facial image) in the vertical direction (the up/down direction) when the local minimum 261C is detected as a border vertically separating the eye image and the nose image. It is therefore acceptable to detect the local minimum where the column pixel value total curve 260 reaches a minimum only within a range near the vertical center (for example, a range equal to half the length in the vertical direction) of the area of the face. Also, the local minimum nearest to the vertical center of the area of the face may be detected.

In detecting the local minima, the process described above can be executed after filtering (low-pass filtering) the column pixel value total curve 260 to remove high-frequency components, because it is impossible to detect local minima caused by extremely small changes in the pixel values or to detect other features that are different from the inherent local minima to be detected. It is also possible to stipulate that the difference in pixel total values $W'_{j'}$ in the facial image between the local minima located before and after (above and below) the detected local minimum must be equal to or greater than a constant value, or to add other restrictions to remove undesirable local minima (induced by noise).

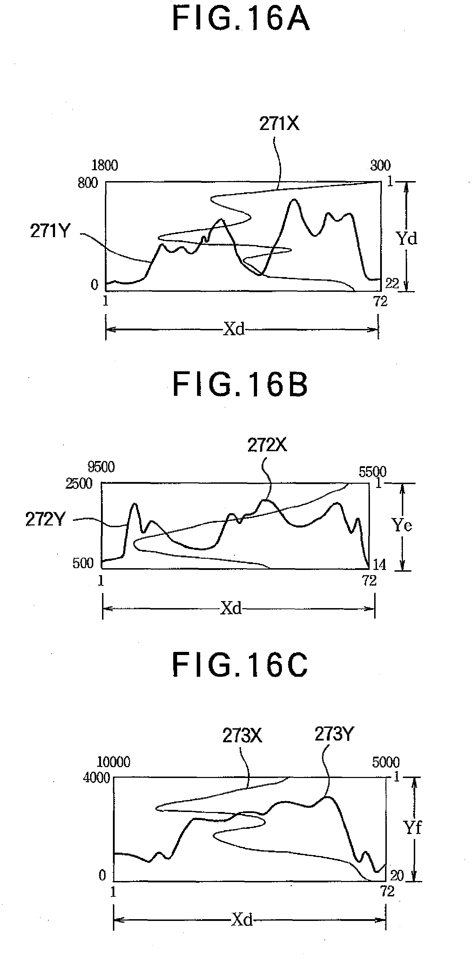

Next, the pixel value adding unit 111 of the eye image processing unit 104 calculates the pixel total values $V'_{ip'}$ or $W'_{jp'}$ for each vertical or horizontal row in the eye image supplied from the image separating unit 103, and supplies these values to the eye area extracting unit 13.2. The eye area extracting unit 112 obtains the row pixel value total curve 271Y or the column pixel value total curve 271X of the eye image shown in FIG. 16A by sequentially plotting the pixel total values $V'_{ip'}$ or $W'_{jp'}$ of the eye image in the horizontal or vertical direction.

Also, the pixel value adding unit 121 of the nose image processing unit 105 calculates the pixel total values $V'_{iq'}$ or $W'_{jq'}$ for each vertical or horizontal row in the nose image supplied from the image separating unit 103, and supplies these values to the nose area extracting unit 122. The nose area extracting unit 122 obtains the row pixel value total curve 272Y or the column pixel value total curve 272X of the nose image shown in FIG. 16B by sequentially plotting the pixel total values $V'_{iq'}$ or $W'_{jq'}$ of the nose image in the horizontal or vertical direction.

Furthermore, the pixel value adding unit 131 of the mouth image processing unit 106 calculates the pixel total values $V'_{ir'}$ or $W'_{jr'}$ for each vertical or horizontal row in the mouth image supplied from the image separating unit 103, and supplies these values to the mouth area extracting unit 132. The mouth area extracting unit 132 obtains the row pixel value total curve 273Y or the column pixel value total curve 273X of the mouth image shown in FIG. 16C by sequentially plotting the pixel total values $V'_{i3'}$ or $W'_{j3'}$ of the nose image in the horizontal or vertical direction.

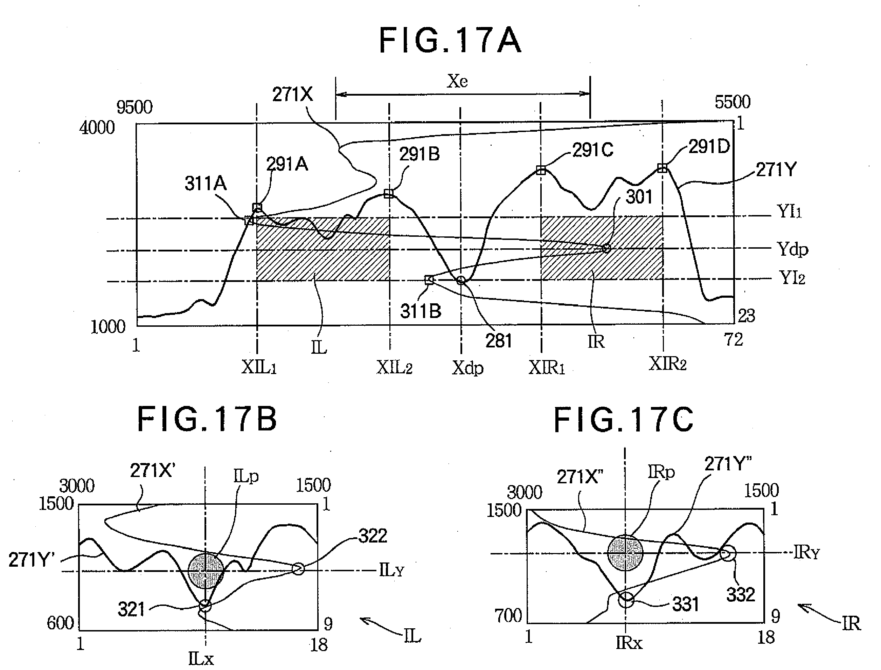

Next, the process performed by the eye area extracting unit 112 and the representative point determining unit 113 of the eye image processing unit 104 will be described with reference to FIG. 17.

The eye area extracting unit 112 uses the row pixel value total curve 271Y and the column pixel value total curve 271X of the eye image to specify the area of the eyes of the user 11.

Specifically, the eye area extracting unit 112 detects the minimum value of the row pixel value total curve 271Y in a range Xe whose width is, for example, half (Xd/2) of the width Xd of the eye image and whose center coincides with the horizontal midpoint (center position) of the eye image.

In FIG. 17A, the local minimum 281 is detected as the minimum value within the range Xe. The horizontal position Xdp of the local minimum 281 is the border separating the left eye image and the right eye image, which include the left and right eyes, respectively.

The next objective of the eye area extracting unit 112 is the row pixel value total curve 271Y in the area to the left (left eye image) of the position Xdp in the horizontal direction of the facial image. The eye area extracting unit 112 detects local maxima in the row pixel value total curve 271Y in the area to the left (left eye image) of the position Xdp, and selects two local maxima 291A and 291B in increasing order from these detected local maxima, as shown in FIG. 17A. The horizontal positions $XIL_1$ and $XIL_2$ corresponding to these two local maxima 291A and 291B are the horizontal positions that specify the area of the left eye. That is, the left eye is specified to be located in the range $XIL_1 \leq i \leq XIL_2$ in the horizontal direction.

The eye area extracting unit 112 similarly detects local maxima in the row pixel value total curve 271Y for the area to the right (right eye image) of the position Xdp, and selects two local maxima 291C and 291D in increasing order from these detected local maxima, as shown in FIG. 17A. The horizontal positions $XIR_1$ and $XIR_2$ corresponding to these two local maxima 291C and 291D are the horizontal positions that specify the area of the right eye. That is, the right eye is specified to be located in the range $XIR_1 \leq i \leq XIR_2$ in the horizontal direction.

The eye area extracting unit 112 detects local minima in the column pixel value total curve 271X (the pixel total values $W'_{jp'}$ of the eye image) in the vertical direction, and selects the local minimum 301 with the lowest value from among these detected local minima, as shown in FIG. 17A.

The eye area extracting unit 112 then detects the local maxima adjacent to the local minimum 301 with the lowest value in the column pixel value total curve 271X. Specifically, the eye area extracting unit 112 inspects the areas above and below the local minimum 301 having the lowest value in the column pixel value total curve 271X, and detects the first local maxima 311A and 311B.

The vertical positions $YI_1$ and $YI_2$ corresponding to the local maxima 311A and 311B are the positions that specify the areas of the left eye and right eye in the vertical direction. That is, the left eye and right eye are specified to be located in a range of $YI_1 \leq j \leq YI_2$ in the vertical direction. The vertical position corresponding to the local minimum 301 is the position Ydp.

As described above, the eye area extracting unit 112 specifies the area encompassing the range $XIL_1 \leq i \leq XIL_2$ and the range $YI_1 \leq j \leq YI_2$ as the left eye area IL, as shown by the slanted lines in FIG. 17A. Also, the eye area extracting unit 112 specifies the area encompassing the range $XIR_1 \leq i \leq XIR_2$ and the range $YI_1 \leq j \leq YI_2$ as the right eye area IR. The eye area extracting unit 112 supplies the positions $XIL_1$, $XIL_2$, $XIR_1$, and $XIR_2$ in the horizontal direction, as well as the positions $YI_1$ and $YI_2$ in the vertical direction, to the representative point determining unit 113 as information specifying the areas of the eyes of the user 11.

The representative point determining unit 113 specifies representative points that represent the positions of the eyes in the areas of the eyes of the user 11.

FIG. 17B shows the column pixel value total curve 271X' and the row pixel value total curve 271Y' that have been recalculated in the left eye area IL. FIG. 17C shows the column pixel value total curve 271X'' and the row pixel value total curve 271Y'' that have been recalculated in the right eye area IR.

In the left eye area IL shown in FIG. 17B, the representative point determining unit 113 detects the minimum 321 of the row pixel value total curve 271Y' and finds the horizontal position $IL_X$ corresponding to this minimum 321. The representative point determining unit 113 also detects the minimum 322 of the column pixel value total curve 271X' and finds the vertical position $IL_Y$ corresponding to the minimum 322. These positions $IL_X$ and $IL_Y$ indicate a representative point $ILp = (IL_X, IL_Y)$ that represents the position of the left eye of the user 11.

Similarly, in the right eye area IR shown in FIG. 17C, the representative point determining unit 113 detects the minimum 331 of the row pixel value total curve 271Y'' and finds the horizontal position $IR_X$ corresponding to this minimum 331. The representative point determining unit 113 also detects the minimum 332 of the column pixel value total curve 271X'' and finds the vertical position $IR_Y$ corresponding to this minimum 332. These positions $IR_X$ and $IR_Y$ indicate a representative point $IRp = (IR_X, IR_Y)$ that represents the position of the right eye of the user 11.

The representative point determining unit 113 supplies the position $(IL_X, IL_Y)$ and the position $(IR_X, IR_Y)$ as information specifying the representative points ILp and IRp of the eye of the user 11 to the image outputting unit 108, together with the information specifying the eye areas described above.

These eye representative points are not limited to indicating the centers of the eyes (irises) or the positions of black eyes, but are in substantially the same position for each user. Therefore, the precision of individual authentication (of the subject) can be improved by finding (comparing) the relationship between the positions of the left and right eyes as representative points.

It is also possible to detect the direction in which the user's line of sight is moving or the orientation of the face of the user 11 by finding the loci of the positions of the left and right eyes as representative points with a plurality of successively photographed images.

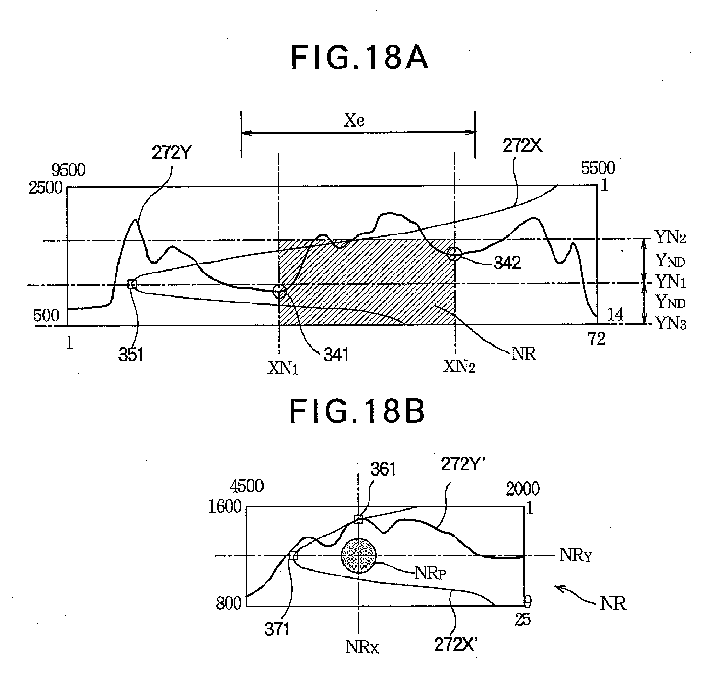

Next, the process performed by the nose area extracting unit 122 and the representative point determining unit 123 of the nose image processing unit 105 will be described with reference to FIG. 18.

The nose area extracting unit 122 specifies the area of the nose of the user 11 by using the row pixel value total curve 272Y and the column pixel value total curve 272X of the nose image.

Specifically, the nose area extracting unit 122 detects the local minimum of the row pixel value total curve 272Y in the range Xe whose width is, for example, half (Xd/2) of the width Xd of the nose image and whose center coincides with the horizontal midpoint (center position) of the nose image. The unit then selects the two local minima 341 and 342 in decreasing order, as shown in FIG. 18A, from the detected local minima. The horizontal positions $XN_1$ and $XN_2$ corresponding to these two local minima 341 and 342 are the horizontal positions that specify the nose area. That is, the nose is specified to be located in the range $XN_1 \le i \le XN_2$ in the horizontal direction.

The nose area extracting unit 122 detects local maxima in the column pixel value total curve 272X in the vertical direction, and selects the local maximum 351 having the greatest value from these detected local maxima. When only one local maximum 351 occurs, as in the column pixel value total curve 272X in FIG. 18A, that local maximum 351 is selected.

The nose area extracting unit 122 then determines the position $YN_2$, which is located above the vertical position $YN_1$ corresponding to the local maximum 351, and is separated by a distance equal to the distance $Y_{ND}$ from the position $YN_1$ to the position $YN_3$ of the vertical lower limit of the nose image. The vertical positions $YN_2$ and $YN_3$ determined in this manner are the positions that specify the area of the nose in the vertical direction. That is, the nose is specified to be located in the range $YN_2 \le j \le YN_3$ in the vertical direction.

As described above, the nose area extracting unit 122 specifies the area encompassed by the range $XN_1 \le i \le XN_2$ and the range $YN_2 \le j \le YN_3$, as shown by the slanted lines in FIG. 18A, as the nose area NR. The nose area extracting unit 122 also supplies the horizontal positions $XN_1$ and $XN_2$ and the vertical positions $YN_2$ and $YN_3$ to the representative point determining unit 123 as information specifying the area of the nose of the user 11.

The representative point determining unit 123 specifies representative points that represent the position of the nose in the area of the nose of the user 11.

FIG. 18B shows the column pixel value total curve 272X' and the row pixel value total curve 272Y' recalculated in the nose area NR.

In the nose area NR shown in FIG. 18B, the representative point determining unit 123 detects the maximum 361 of the row pixel value total curve 272Y' and finds the horizontal position $NR_X$ corresponding to this maximum 361. The representative point determining unit 123 also detects the maximum 371 of the column pixel value total curve 272X' and finds the vertical positions $NR_Y$ corresponding to this maximum 371. These positions $NR_X$ and $NR_Y$ are representative points NRp = ($NR_X$, $NR_Y$) that represent the position of the nose of the user 11.

The representative point determining unit 123 supplies these positions ($NR_X$, $NR_Y$) to the image outputting unit 108 as information specifying the representative points NRp of the nose of the user 11, along with the information specifying the area of the nose described above.

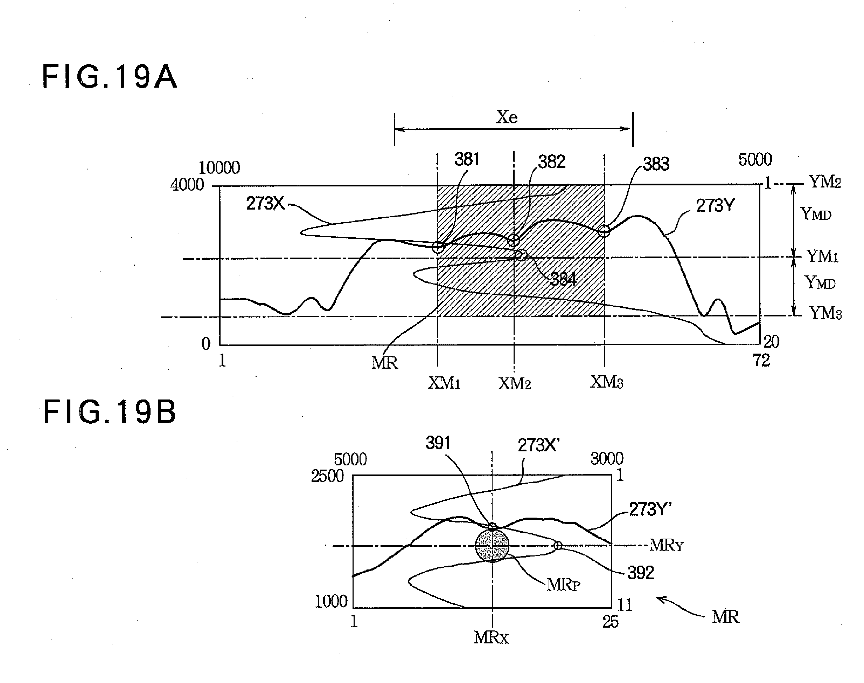

Next, the process performed by the mouth area extracting unit 132 and the representative point determining unit 133 of the mouth image processing unit 106 will be described with reference to FIG. 19.

The mouth area extracting unit 132 uses the row pixel value total curve 273Y and the column pixel value total curve 273X of the mouth image to specify the area of the mouth of the user 11.

Specifically, the mouth area extracting unit 132 detects the three local minima 381 through 383 of the row pixel value total curve 273Y in the range Xe whose width is, for example, half (Xd/2) of the width Xd of the mouth image and whose center coincides with the horizontal midpoint (center position) of the mouth image. The mouth area extracting unit 132 then selects the local minima 381 and 383 (specifically, on either side) having the greatest and the lowest values in the horizontal direction from the detected local minima 381 through 383. The horizontal positions $XM_1$ and $XM_3$ corresponding to these two local minima 381 and 383 are the horizontal positions that specify the mouth area. That is, the mouth is specified to be located in the range $XM_1 \leq i \leq XM_3$ in the horizontal direction.

The mouth area extracting unit 132 detects local minima in the column pixel value total curve 273X in the vertical direction, and selects the local minimum 384 having the lowest value from these detected local minima. When only one local minimum 384 occurs, as in the column pixel value total curve 273X in FIG. 19A, that local minimum 384 is selected.

The mouth area extracting unit 132 then determines the position $YM_3$, which is located below the vertical position $YM_1$ corresponding to the local minimum 384 and is separated by a distance equal to the distance $Y_{MD}$ from the position $YM_1$ to the position $YM_2$ of the vertical upper limit of the mouth image. The vertical positions $YM_2$ and $YM_3$ determined in this manner are the positions that specify the area of the mouth in the vertical direction. That is, the mouth is specified to be located in the range $YM_2 \leq j \leq YM_3$ in the vertical direction.

As described above, the mouth area extracting unit 132 specifies the area encompassed by the range $XM_1 \leq i \leq XM_3$ and the range $YM_2 \leq j \leq YM_3$, as shown by the slanted lines in FIG. 19A, as the mouth area MR. The mouth area extracting unit 132 also supplies the horizontal positions $XM_1$ and $XM_3$ and the vertical positions $YM_2$ and $YM_3$ to the representative point determining unit 133 as information specifying the area of the mouth of the user 11.

The representative point determining unit 133 specifies representative points that represent the position of the mouth in the area of the mouth of the user 11.

FIG. 19B shows the column pixel value total curve 273X' and the row pixel value total curve 273Y' recalculated in the mouth area MR.

In the mouth area MR shown in FIG. 19B, the representative point determining unit 133 detects the local minimum 391 of the row pixel value total curve 273Y' and finds the horizontal position $MR_X$ corresponding to this local minimum 391. The representative point determining unit 133 also detects the local minimum 392 of the column pixel value total curve 273X' and finds the vertical positions $MR_Y$ corresponding to this local minimum 392. These positions $MR_X$ and $MR_Y$ are representative points MRp = ($MR_X$, $MR_Y$) that represent the position of the mouth of the user 11.

The representative point determining unit 133 supplies these positions ($MR_X$, $MR_Y$) to the image outputting unit 108 as information specifying the representative points MRp of the mouth of the user 11, along with the information specifying the area of the mouth described above.

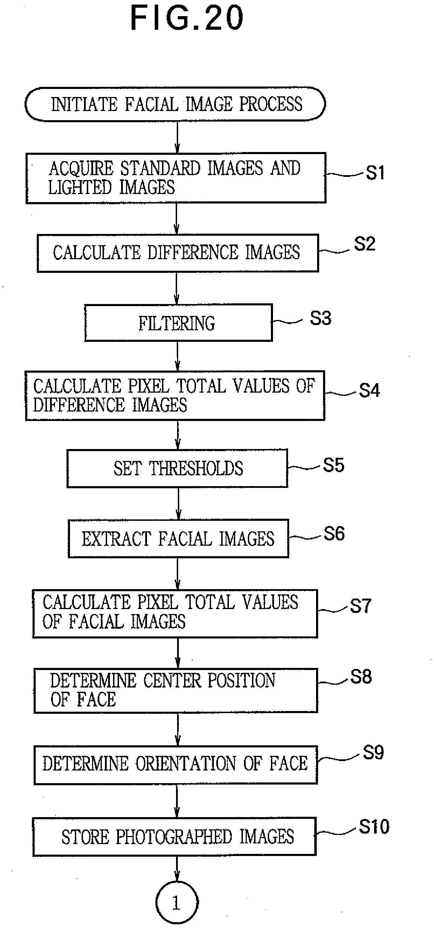

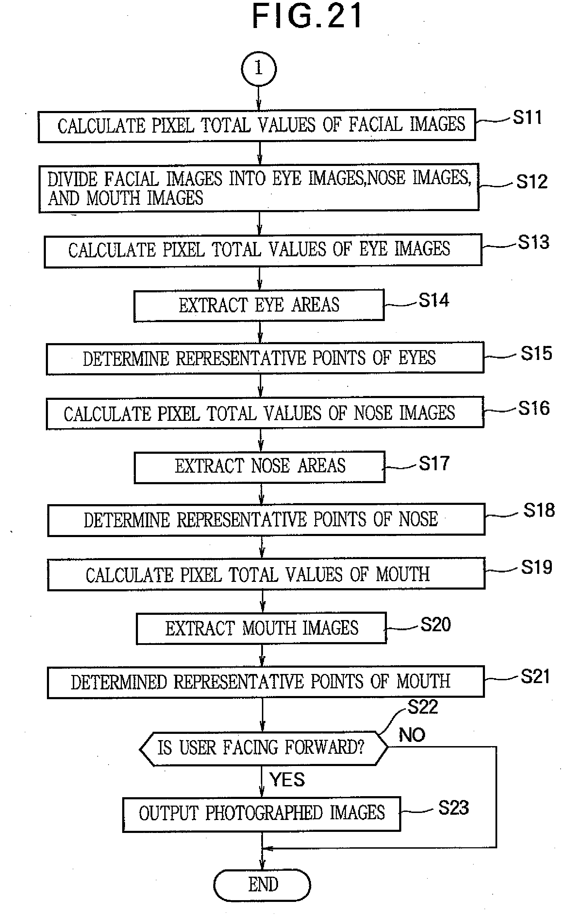

Next, the process of the image processing apparatus 15 will be described with reference to the flowcharts in FIGS. 20 and 21. This process is initiated when photographed images are supplied from the image pickup apparatus 12 to the image processing apparatus 15.

First, in step S1, the image capturing unit 61 of the difference image calculating unit 21 captures standard images and lighted images. More specifically, the image capturing unit 61 captures the photographed images supplied from the image pickup apparatus 12, and determines whether the photographed images supplied from the image pickup apparatus 12 are standard images or lighted images according to a determination signal from the timing control apparatus 14. The image capturing unit 61 then supplies the photographed images to the memory 62 if the supplied photographed images are standard images, and supplies the photographed images to the memory 63 if the supplied photographed images are lighted images.

In step S2, the difference processing unit 64 of the difference image calculating unit 21 calculates difference images from the standard images stored in the memory 62 and the lighted images stored in the memory 63.

In step S3, the filtering process unit 65 of the difference image calculating unit 21 filters (performs a filtering process on) the difference images from the difference processing unit 64 and supplies the filtered difference images to the facial area extracting unit 22.

In step S4, the pixel value adding unit 71 of the facial area extracting unit 22 adds pixel values of the difference image in the vertical and horizontal directions for each row, and calculates the pixel total values $V_i$ and $W_j$ of the difference image in the vertical and horizontal directions for each row.

In step S5, the threshold setting unit 72 of the facial area extracting unit 22 calculates and sets thresholds $TH_X$ and $TH_Y$ for distinguishing the facial areas of the user 11 from other areas in the horizontal and vertical directions of the difference images.

In step S6, the facial area data extracting unit 73 of the facial area extracting unit 22 extracts facial images from the difference images. Specifically, the facial area data extracting unit 73 specifies the positions of the facial areas of the user 11 in the difference images on the basis of the pixel total values $V_i$ and $W_j$ of the difference images supplied from the pixel value adding unit 71, and the thresholds $TH_X$ and $TH_Y$ supplied from the threshold setting unit 72. The facial area data extracting unit 73 then supplies the facial area information specifying the facial areas of the user 11 to the face orientation determining unit 23 with the difference images supplied from the difference image calculating unit 21.

In step S7, the pixel value adding unit 81 of the face orientation determining unit 23 calculates the pixel total values $V'_i$ of the facial images and supplies these values to the center position detecting unit 82.

In step S8, the center position detecting unit 82 of the face orientation determining unit 23 determines the center position (barycentric position) X' of the face of the user 11 in the horizontal direction, and supplies this information to the determining unit 83.

In step S9, the determining unit 83 of the face orientation determining unit 23 determines which way the user 11 is facing according to whether the center position X' of the face of the user 11 in the horizontal direction is located in a range or a specific distance that is $\pm$ XR from the horizontal midpoint Xp of the facial image, or whether the center position is located to the left or the right of this range. The results of this determination are then supplied to the facial organ extracting unit 24 with the difference images and the facial area information.

In step S10, the memory 107 of the facial organ extracting unit 24 stores the photographed images (standard images and lighted images) supplied from the image pickup apparatus 12.

In step S11, the pixel value adding unit 101 of the facial organ extracting unit 24 calculates the pixel total values $W'_j$ of the facial images and supplies these values to the image separating unit 103.

In step S12, the image separating unit 103 of the facial organ extracting unit 24 divides the facial images into eye images, nose images, and mouth images using the pixel total values $W'_j$ of the facial images from the pixel value adding unit 101. The image separating unit 103 then supplies the divided eye images, nose images, and mouth images to the eye image processing unit 104, the nose image processing unit 105, and the mouth image processing unit 106, respectively.

In step S13, the pixel value adding unit 111 of the eye image processing unit 104 calculates the pixel total values $V'_{ip}$ and $W'_{jp}$ of the eye images and supplies these values to the eye area extracting unit 112.

In step S14, the eye area extracting unit 112 of the eye image processing unit 104 uses the row pixel value total curves and the column pixel value total curves of the eye images to specify the areas of the eyes of the user 11. The eye area extracting unit 112 then supplies the information specifying the areas of the eyes of the user 11 together with the eye images to the representative point determining unit 113.

In step S15, the representative point determining unit 113 of the eye image processing unit 104 uses the row pixel value total curves and the column pixel value total curves recalculated for the areas of the eyes to specify representative points that represent the positions of the eyes of the user 11. The representative point determining unit 113 then supplies the eye area information (information specifying the areas of the eyes and information specifying the representative points of the eyes) to the image outputting unit 108.

In step S16, the pixel value adding unit 121 of the nose image processing unit 105 calculates the pixel total values $V'_{iq}$ and $W'_{jq}$ of the nose images and supplies these values to the nose area extracting unit 122.

In step S17, the nose area extracting unit 122 of the nose image processing unit 105 specifies the areas of the nose of the user 11 by using the row pixel value total curves and the column pixel value total curves of the nose images. The nose area extracting unit 122 then supplies the information specifying the areas of the nose of the user 11 together with the nose images to the representative point determining unit 123.

In step S18, the representative point determining unit 123 of the nose image processing unit 105 specifies (determines) representative points that represent the positions of the nose of the user 11 by using the row pixel value total curves and the column pixel value total curves recalculated for the areas of the nose. The representative point determining unit 123 then supplies the nose area information (information specifying the areas of the nose and information specifying the representative points of the nose) to the image outputting unit 108.

In step S19, the pixel value adding unit 131 of the mouth image processing unit 106 calculates the pixel total values $V'_{ir}$ and $W'_{jr}$ of the mouth images and supplies these values to the mouth area extracting unit 132.

In step S20, the mouth area extracting unit 132 of the mouth image processing unit 106 specifies the areas of the mouth of the user 11 by using the row pixel value total curves and the column pixel value total curves of the mouth images. The mouth area extracting unit 132 then supplies the information specifying the areas of the mouth of the user 11 together with the mouth images to the representative point determining unit 133.

In step S21, the representative point determining unit 133 of the mouth image processing unit 106 specifies (determines) representative points that represent the positions of the mouth of the user 11 by using the row pixel value total curves and the column pixel value total curves recalculated for the areas of the mouth. The representative point determining unit 133 then supplies the mouth area information (information specifying the areas of the mouth and information specifying the representative points of the mouth) to the image outputting unit 108.

In step S22, the image outputting unit 108 of the mouth image processing unit 106 determines whether or not the photographed images stored in the memory 107 in step S10 described above are to be outputted according to the determination results supplied from the face orientation determining unit 23. Specifically, if the user 11 is determined to be facing to the right or the left from the determination results, the image outputting unit 108 skips step S23 (without outputting the photographed images stored in the memory 107) and ends the process.

When the user 11 is determined to be facing forward from the determination results, the process advances to step S23, and the image outputting unit 108 outputs the photographed images stored in the memory 107 along with the facial area information, the eye area information, the nose area information, and the mouth area information, and ends the process.

As described above, the image processing apparatus 15 outputs only photographed images suitable for facial image recognition, and also outputs the facial areas, eye areas, nose areas, mouth areas, and representative points of the eyes, nose, and mouth of the outputted photographed images. Facial images can thereby be recognized easily and accurately in the apparatuses that receive the output from the image processing apparatus 15.

The process in step S13 through S15 described above, the process in step S16 through S18, and the process in step S19 through S21 may be performed in any order, and they can also be performed simultaneously (concurrently).

In step S23 described above, the image outputting unit 108 is designed to output the photographed images stored in the memory 107 when the user 11 is determined to be facing forward, regardless of whether the photographed images stored in the memory 107 are standard images or lighted images, but the images may also be outputted only when they are standard images.

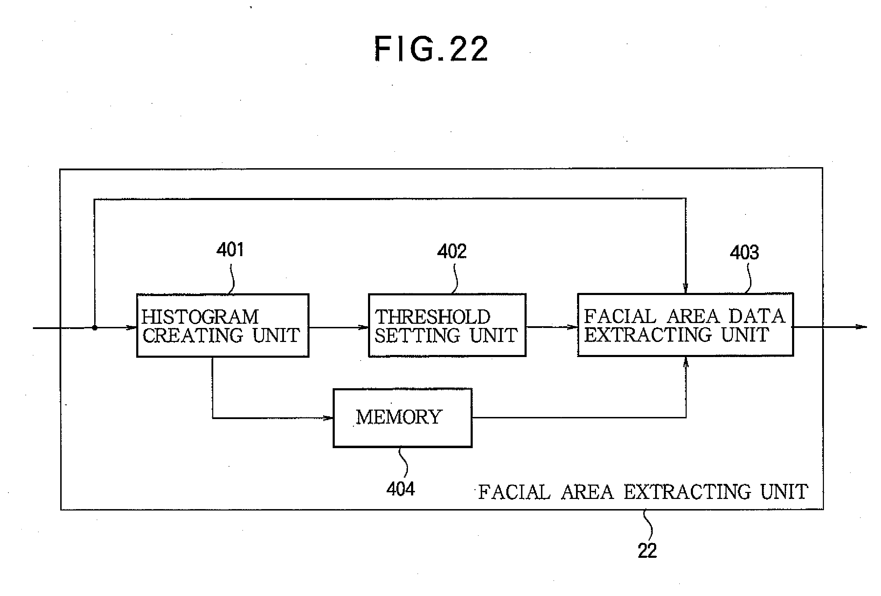

FIG. 22 is a block diagram showing another embodiment of the facial area extracting unit 22 in FIG. 1.

In FIG. 22, the facial area extracting unit 22 is configured from a histogram creating unit 401, a threshold setting unit 402, a facial area data extracting unit 403, and memory 404.

The difference images (after filtering) supplied from (the filtering process unit 65 of) the difference image calculating unit 21 are supplied to the histogram creating unit 401 and the facial area data extracting unit 403.

The histogram creating unit 401 creates a histogram of the pixel values of the difference images, wherein the number of pixels are totaled for each of the pixels that have the same pixel value in the difference images, and supplies the histogram to the threshold setting unit 402. The histogram creating unit 401 also creates a table in which the pixel positions and the pixel values are corrected to each other for all of the pixels in the difference images, and supplies the table to the memory 404. By referring to this table, it is possible to specify the position in a difference image of a pixel having a specific pixel value when the pixel value is indicated.

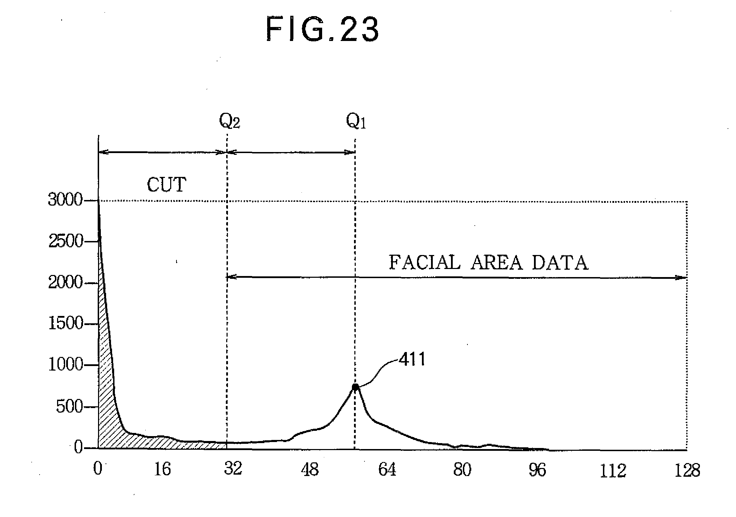

The threshold setting unit 402 determines (sets) the pixel values distinguishing the facial areas of the user 11 and other areas as a threshold $Q_2$ (FIG. 23) on the basis of the histogram of pixel values in the difference image from the histogram creating unit 401, and supplies this information to the facial area data extracting unit 403.

The facial area data extracting unit 403 specifies the facial areas of the user 11 in the difference images on the basis of the threshold $Q_z$ from the threshold setting unit 402 and the table stored in the memory 404. The facial area data extracting unit 403 then supplies the facial area information specifying the facial area of the user 11 to the face orientation determining unit 23 (FIG. 1) along with the difference image supplied from the difference image calculating unit 21 (FIG. 1).

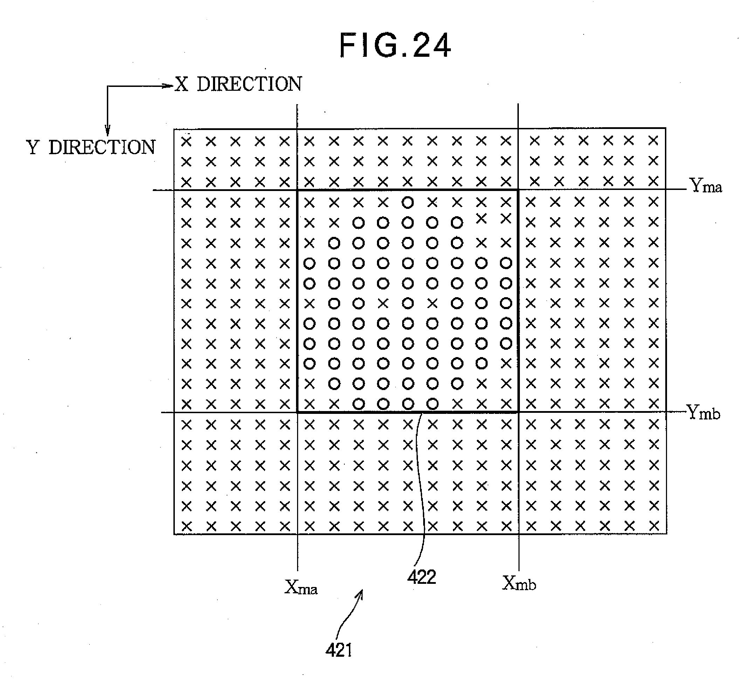

The process performed by the facial area extracting unit 22 in FIG. 22 will now be described with reference to FIGS. 23 and 24.

FIG. 23 shows a histogram of pixel values in a difference image created by the histogram creating unit 401.

In FIG. 23, the horizontal axis represents the pixel values, and the vertical axis represents the number of pixels.

The threshold setting unit 402 first detects local maxima in the histogram of pixel values in the difference image. In FIG. 23, a local maximum 411 is detected at the position of the pixel value $Q_1$. If a plurality of local maxima are detected, then the threshold setting unit 402 uses the local maximum with the greatest number of pixels (the maximum local maximum) from among the detected plurality of local maxima.

In the difference image, the pixel values of the background areas (areas other than the facial areas) are either 0 or near 0 and the pixel values of the facial areas other than 0, as shown in FIG. 11C, and therefore the histogram of the pixel values has a distribution that is concentrated (the number of pixels is high) at two pixel values, which are 0 and another value, as shown in FIG. 23.

Therefore, when the local maximum of the histogram of pixel values in the difference image is detected, the local maxima with a pixel value near 0 are clearly those of the background areas, and therefore it is possible to detect the local maxima by setting restrictive conditions in which the detected local maxima must be equal to or greater than a specific pixel value near 0, or the number of pixels must be equal to or greater than a specific value.

The threshold setting unit 402 determines the pixel value at the median between the pixel value 0 and the pixel

value $Q_1$ having the detected local maximum 411, or, specifically, the pixel value $Q_2$ which is half the pixel value $Q_1$ having the detected local maximum 411, as a threshold for distinguishing facial images of the user 11 from other areas, and supplies this information to the facial area data extracting unit 403.

The threshold $Q_2$ is supplied to the facial area data extracting unit 403 from the threshold setting unit 402. The facial area data extracting unit 403 refers to the table in which the positions and the pixel values of the pixels in the difference image are correlated with each other and which is stored in the memory 404 to specify the pixels in the difference image having pixel values equal to or greater than the threshold $Q_2$.

FIG. 24 shows pixels in a difference image 421 that have pixel values equal to or greater than the threshold $Q_2$ supplied from the threshold setting unit 402.

In FIG. 24, the symbols "o" and "×" in the difference image 421 indicate pixels constituting the difference image 421, wherein the pixels denoted by "o" indicate a pixel value equal to or greater than the threshold $Q_2$, and the pixels denoted by "×" indicate a pixel value less than the threshold $Q_2$.

The facial area data extracting unit 403 determines an upper limit (maximum position) and a lower limit (minimum position) of the pixels (denoted by "o") having a pixel value equal to or greater than the threshold $Q_2$, in both the horizontal and vertical directions of the difference image.

In the difference image 421 shown in FIG. 24, the position $X_{mb}$ is determined by the facial area data extracting unit 403 as the upper limit of pixels having a pixel value equal to or greater than the threshold $Q_2$ in the horizontal direction of the difference image, and the position $X_{ma}$ is determined as the lower limit of pixels having a pixel value equal to or greater than the threshold $Q_2$.

Also, the position $Y_{mb}$ is determined as the upper limit of pixels having a pixel value equal to or greater than the threshold $Q_2$ in the vertical direction of the difference image, and the position $Y_{ma}$ is determined as the lower limit of pixels having a pixel value equal to or greater than the threshold $Q_2$.

The facial area data extracting unit 403 specifies that the area 422 encompassed by the range $X_{ma} \le i < X_{mb}$ and the range $Y_{ma} \le j \le Y_{mb}$, as shown by the bold lines in FIG. 24, is an area of the face of the user 11.

The facial area data extracting unit 403 supplies the horizontal positions $X_{ma}$ and $X_{mb}$ and the vertical positions $Y_{ma}$ and $Y_{mb}$ that specify the areas of the face of the user 11 to the face orientation determining unit 23 as facial area information along with the difference image 421.

When the facial area extracting unit 22 in the image processing apparatus 15 in FIG. 1 is configured as shown in FIG. 22 instead of being configured as shown in FIG. 7, in step S4 in the process in FIGS. 20 and 21, the histogram creating unit 401 creates a histogram of pixel values in the difference image and supplies it to the threshold setting unit 402, and also creates a table in which the pixel positions and the pixel values are correlated with each other for all the pixels in the difference image, and supplies this table to the memory 404.

In step S5, the threshold setting unit 402 determines the threshold $Q_2$ for distinguishing the facial areas of the user 11 from other areas on the basis of the histogram of pixel values in the difference image, and supplies this threshold to the facial area data extracting unit 403.

In step S6, the facial area data extracting unit 403 specifies the positions of the facial areas of the user 11 in the difference image on the basis of the threshold $Q_2$ from the threshold setting unit 402 and the table stored in the memory 404. The facial area data extracting unit 403 then supplies the facial area information specifying the facial area of the user 11 to the face orientation determining unit 23 (FIG. 1) along with the difference image supplied from the difference image calculating unit 21 (FIG. 1).

Except for the process in step S4 through S6, the processes in step S1 through S3 and S7 through S23 are the same, and a description thereof is therefore omitted.

As described above, even if the facial area extracting unit 22 of the image processing apparatus 15 is configured as shown in FIG. 22, the image processing apparatus 15 still outputs only photographed images suitable for facial image recognition, and also outputs the facial areas, eye areas, nose areas, mouth areas, and representative points of the eyes, nose, and mouth of the outputted photographed images. Facial images can thereby be recognized easily and accurately in the apparatuses that receive the output from the image processing apparatus 15.

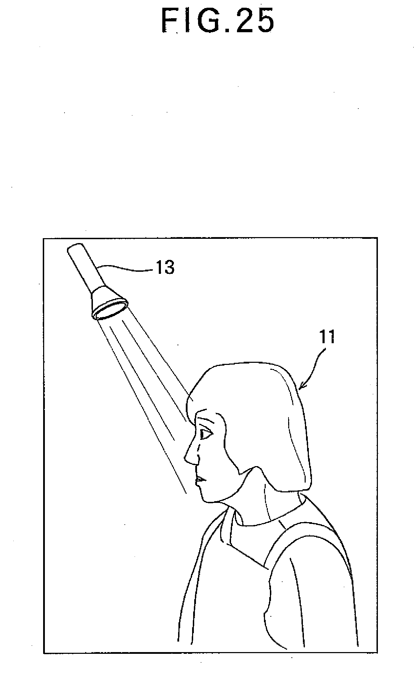

In the embodiment described above, the lighting apparatus 13 was disposed so as to illuminate the face of the user 11 with light at an upward angle, as shown in FIG. 10, but the lighting apparatus 13 may also be disposed so as to illuminate the face of the user 11 with light at a downward angle, as shown in FIG. 25. The lighting apparatus 13 may also be disposed so as to illuminate the face of the user 11 with light from a level height, from both a left angle and a right angle.

Also, in the embodiment described above, an example was described in which the areas of the face of a person (the user) were recognized as the object of recognition, but it is also possible to use the face of an animal as the object of recognition.

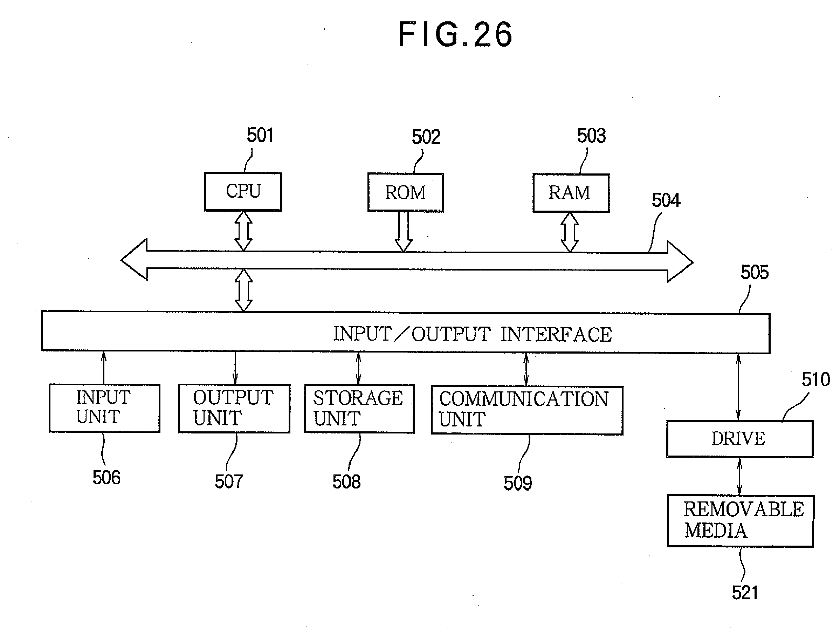

The process shown in FIGS. 20 and 21 can be executed by designated hardware, and can also be executed by software. If this process is performed by software, for example, a series of processes can be carried out by running a program on a (personal) computer such as is shown in FIG. 26.

In FIG. 26, the CPU (central processing unit) 501 executes various processes according to a program stored in ROM (read only memory) 502 and a program loaded in RAM (random access memory) 503 from a storage unit 508. Data needed for the CPU 501 to execute the various processes is also appropriately stored in the RAM 503.

The CPU 501, the ROM 502, and the RAM 503 are connected to each other via a bus 504. An input/output interface 505 is also connected to this bus 504.

Connected to the input/output interface 505 are an input unit 506 configured from a keyboard and a mouse, a display configured from a CRT (cathode ray tube) and an LCD (liquid crystal display), an output unit 507 configured from a speaker, a storage unit 508 configured from a hard disk or the like, and a communication unit 509 configured from a terminal adapter an ADSL (asymmetric digital subscriber line) modem, and a LAN (local area network) card. The communication unit 509 communicates via the Internet and other such various networks.

The input/output interface 505 is also connected to a drive 510 as necessary, and a magnetic disk (which may be a floppy disk), an optical disk (which may be a CD-ROM (compact disk-read only memory) or a DVD (digital versatile disk)), an optical magnetic disk (which may be an MD (mini-disk)), or a semiconductor memory or another such removable medium (recording medium) 521 is appropriately attached, from which the computer program is read and installed on the storage unit 508 as necessary.

In the present specification, the steps in the flowcharts include processes that are executed not necessarily in a chronological manner, but rather in parallel or individually, as well as, of course, process that are performed in a chronological manner in the stipulated order.

Also, in the present specification, the term "system" refers to the entire apparatus configured from a plurality of apparatuses.

## Claims

1.  An image processing system for recognizing areas of a face included in an image, comprising:

    image pickup means for photographing a subject and outputting pixel values substantially proportionate to the logarithm of the amount of incident light;

    lighting means for radiating light to the face to be recognized;

    capturing means for capturing a first image in which the face is photographed by the image pickup means while the lighting means does not irradiate the face with light, and a second image in which the face is photographed by the image pickup means while the lighting means irradiates the face with light;

    difference image calculation means for calculating a difference image composed of the difference in pixel values between the first image and the second image;

    pixel value processing means for performing a specific process using the pixel values of the pixels of the difference image calculated by the difference image calculating means;

    threshold setting means for setting a threshold for processing results of the pixel value processing means; and

    extraction means for extracting the areas of the face in the difference image on the basis of the threshold set by the threshold setting means.

2.  The image processing system according to claim 1, wherein
    the lighting means irradiates the face with light at either an oblique upward angle or a downward oblique angle.

3.  The image processing system according to claim 1, wherein
    the image pickup means has a logarithm conversion type image pickup element that uses sub-threshold characteristics of a semiconductor and outputs a pixel value substantially proportionate to the logarithm of the amount of incident light.

4.  An image processing apparatus for recognizing areas of a face included in an image; comprising:

    capturing means for capturing a first image in which the face to be recognized is photographed by image pickup means while the lighting means does not irradiate the face with light, and a second image in which the face to be recognized is photographed by the image pickup means while the lighting means irradiates the face with light;

    difference image calculation means for calculating a difference image composed of the difference in pixel values between the first image and the second image;

    pixel value processing means for performing a specific process using the pixel values of the pixels of the difference image calculated by the difference image calculating means;

    threshold setting means for setting a threshold for processing results of the pixel value processing means; and

extraction means for extracting the areas of the face in the difference image on the basis of the threshold set by the threshold setting means.

5. The image processing apparatus according to claim 4, wherein
the pixel value processing means calculates pixel added values by adding the pixel values calculated by the difference image calculating means for each row in the horizontal or vertical direction of the difference image; and
the threshold setting means sets a threshold for the pixel added values calculated by the pixel value processing means for each row in the horizontal or vertical direction of the difference image.

6. The image processing apparatus according to claim 5, wherein the threshold setting means sets the average of the pixel values of the difference image for each row in the horizontal or vertical direction as the threshold.

7. The image processing apparatus according to claim 4, wherein
the pixel value processing means creates a histogram of the pixel values of the difference image by totaling the pixel number for each of the pixels having the same pixel value in the difference image calculated by the difference image calculating means; and
the threshold setting means sets a threshold for the histogram of the pixel values of the difference image.

8. The image processing apparatus according to claim 4, further comprising:

filter means for filtering the difference image calculated by the difference image calculating means.

9. The image processing apparatus according to claim 4, wherein
the first and second images are photographed by the image pickup means having a logarithm conversion type image pickup element that uses the sub-threshold characteristics of a semiconductor and outputs a pixel value substantially proportionate to the logarithm of the amount of incident light.

10. An image processing method for an image processing apparatus that recognizes areas of a face included in an image, comprising the steps of:

capturing a first image in which the face to be recognized is photographed by image pickup means while the lighting means does not irradiate the face with light, and a second image in which the face to be recognized is photographed by the image pickup means while the lighting means irradiates the face with light;
calculating a difference image composed of the difference in pixel values between the first image and the second image;
performing a specific process for pixel values using the pixel values of the pixels of the difference image calculated by the difference image calculating step;
setting a threshold for processing results of the pixel value processing step; and
extracting the areas of the face in the difference image on the basis of the threshold set by the threshold setting step.

11. A program for causing a computer to execute a process of recognizing areas of a face included in an image, comprising the steps of:

capturing a first image in which the face to be recognized is photographed by image pickup means while lighting means does not irradiate the face with light, and a second image in which the face to be recognized is photographed by the image pickup means while the lighting means irradiates the face with light;
calculating a difference image composed of the difference in pixel values between the first image and the second image;
performing a specific process for pixel values using the pixel values of the pixels of the difference image calculated by the step of calculating a difference image;
setting a threshold for processing results by the step of performing a specific process for pixel values; and
extracting the areas of the face in the difference image on the basis of the threshold set by the step of setting a threshold.

12. A recording medium for storing a program that causes a computer to execute a process of recognizing areas of a face included in an image, the program comprising the steps of:

capturing a first image in which the face to be recognized is photographed by image pickup means while lighting means does not irradiate the face with light, and a second image in which the face to be recognized is photographed by the image pickup means while the lighting means irradiates the face with light;

calculating a difference image composed of the difference in pixel values between the first image and the second image;

performing a specific process for pixel values using the pixel values of the pixels of the difference image calculated by the step of calculating a difference image;

setting a threshold for processing results by the step of performing a specific process for pixel values; and

extracting the areas of the face in the difference image on the basis of the threshold set by the step of setting a threshold.

# FIG.1

**11** (person figure)

**12** IMAGE PICKUP APPARATUS

**21** DIFFERENCE IMAGE CALCULATING UNIT

**22** FACIAL AREA EXTRACTING UNIT

**23** FACE ORIENTATION DETERMINING UNIT

**24** FACIAL ORGAN EXTRACTING UNIT

IMAGE PROCESSING APPARATUS

**15**

**13** LIGHTING APPARATUS

**14** TIMING CONTROL APPARATUS

**1**

EP 1 703 436 A2

# FIG.2

X DIRECTION

Y DIRECTION

31

# FIG.3

# FIG.4

```
                    51              52              53
        41      ┌──────────┐   ┌──────────┐   ┌──────────┐
    ┌────────┐  │ LIGHT    │   │LOGARITHM │   │ A/D      │
    │ LENS   │→ │ DETECTING│ → │CONVERTER │ → │ CONVERTER│ →
    └────────┘  │ UNIT     │   │          │   │          │
                └──────────┘   └──────────┘   └──────────┘
                      ↑                              ↑
                      │                              │
                ┌──────────────────────────┐
                │ PHOTOGRAPH TIMING         │ ～54
                │ CONTROL UNIT              │
                └──────────────────────────┘
                            ↑
                    LOGARITHM CONVERSION
                    TYPE IMAGE PICKUP ELEMENT

    IMAGE PICKUP APPARATUS                    42
                            │
                           12
```

IMAGE PICKUP APPARATUS

LOGARITHM CONVERSION
TYPE IMAGE PICKUP ELEMENT

# FIG.5

# FIG.6

EP 1 703 436 A2

# FIG.7

71 PIXEL VALUE ADDING UNIT

72 THRESHOLD SETTING UNIT

73 FACIAL AREA DATA EXTRACTING UNIT

22 FACIAL AREA EXTRACTING UNIT

# FIG.8

```
                    ┌─────────────┐   ┌─────────────┐   ┌─────────────┐
                    │             │   │ CENTER      │   │             │
─────────●────────→ │ PIXEL VALUE │ → │ POSITION    │ → │ DETERMINING │ ──────→
              │     │ ADDING UNIT │   │ DETECTING   │   │ UNIT        │
              │     │             │   │ UNIT        │   │             │
              │     └─────────────┘   └─────────────┘   └─────────────┘
              │            │                 │             ↑    │
              └────────────┼─────────────────┼─────────────┘    │
                          81                82                  83
```

FACE ORIENTATION
DETERMINING UNIT

23

# FIG.9

FACIAL ORGAN EXTRACTING UNIT   24

107 — MEMORY

IMAGE OUTPUTTING UNIT

108

101   103

PIXEL VALUE ADDING UNIT

EYE/NOSE/MOUTH IMAGE SEPARATING UNIT

MEMORY   102

111
PIXEL VALUE ADDING UNIT

EYE AREA EXTRACTING UNIT

REPRESENTATIVE POINT DETERMINING UNIT

EYE IMAGE PROCESSING UNIT   112   113

104

121
PIXEL VALUE ADDING UNIT

NOSE AREA EXTRACTING UNIT

REPRESENTATIVE POINT DETERMINING UNIT

NOSE IMAGE PROCESSING UNIT   122   123

105

131
PIXEL VALUE ADDING UNIT

MOUTH AREA EXTRACTING UNIT

REPRESENTATIVE POINT DETERMINING UNIT

MOUTH IMAGE PROCESSING UNIT   132   133

106

EP 1 703 436 A2

# FIG.10

EP 1 703 436 A2

# FIG.11A

201A

# FIG.11C

201C

Ya

Yb

Yc

|← Xa →|← Xb →|← Xc →|

# FIG.11B

201B

# FIG.11D

PIXEL TOTAL VALUES Wj IN THE X DIRECTION

5000  4500  4000  3500  3000  2500  2000  1500  1000  500  0

PIXEL TOTAL VALUES Vi IN THE Y DIRECTION

8000
7000
6000
5000
4000
3000
2000
1000
0

221X

221Y

1
Ya

Y POSITION

Yb

128  Yc
256

|← Xa →|← Xb →|← Xc →|

X POSITION

# FIG.12A

# FIG.12B

# FIG.13A

# FIG.13B

# FIG.13C

EP 1 703 436 A2

# FIG.14

# FIG.15

EP 1 703 436 A2

# FIG.16A

271X

271Y

# FIG.16B

272X

272Y

# FIG.16C

273X    273Y

# FIG.17A

# FIG.17B

# FIG.17C

EP 1 703 436 A2

# FIG.18A

# FIG.18B

EP 1 703 436 A2

# FIG.19A

# FIG.19B

EP 1 703 436 A2

# FIG.20

INITIATE FACIAL IMAGE PROCESS

ACQUIRE STANDARD IMAGES AND LIGHTED IMAGES — S1

CALCULATE DIFFERENCE IMAGES — S2

FILTERING — S3

CALCULATE PIXEL TOTAL VALUES OF DIFFERENCE IMAGES — S4

SET THRESHOLDS — S5

EXTRACT FACIAL IMAGES — S6

CALCULATE PIXEL TOTAL VALUES OF FACIAL IMAGES — S7

DETERMINE CENTER POSITION OF FACE — S8

DETERMINE ORIENTATION OF FACE — S9

STORE PHOTOGRAPHED IMAGES — S10

1

# FIG.21

①

↓

| CALCULATE PIXEL TOTAL VALUES OF FACIAL IMAGES | — S11 |

↓

| DIVIDE FACIAL IMAGES INTO EYE IMAGES,NOSE IMAGES, AND MOUTH IMAGES | — S12 |

↓

| CALCULATE PIXEL TOTAL VALUES OF EYE IMAGES | — S13 |

↓

| EXTRACT EYE AREAS | — S14 |

↓

| DETERMINE REPRESENTATIVE POINTS OF EYES | — S15 |

↓

| CALCULATE PIXEL TOTAL VALUES OF NOSE IMAGES | — S16 |

↓

| EXTRACT NOSE AREAS | — S17 |

↓

| DETERMINE REPRESENTATIVE POINTS OF NOSE | — S18 |

↓

| CALCULATE PIXEL TOTAL VALUES OF MOUTH | — S19 |

↓

| EXTRACT MOUTH IMAGES | — S20 |

↓

| DETERMINED REPRESENTATIVE POINTS OF MOUTH | — S21 |

↓

S22

IS USER FACING FORWARD? — NO

YES

| OUTPUT PHOTOGRAPHED IMAGES | — S23 |

↓

( END )

45

# FIG.22

401

HISTOGRAM CREATING UNIT

402

THRESHOLD SETTING UNIT

403

FACIAL AREA DATA EXTRACTING UNIT

MEMORY

404

FACIAL AREA EXTRACTING UNIT

22

EP 1 703 436 A2

# FIG.23

EP 1 703 436 A2

# FIG.24

X DIRECTION

Y DIRECTION

Yma

Ymb

Xma

422

Xmb

421

EP 1 703 436 A2

# FIG.25

# FIG.26

EP 1 703 436 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0591406 B

- JP 7506932 A